# EUROPEAN PATENT SPECIFICATION

(11) **EP 2 992 030 B1**
(45) Date of publication and mention of the grant of the patent: **03.06.2020**
(21) Application number: 14792022.7
(22) Date of filing: 25.04.2014
(51) Int. Cl.: C08G 64/02

(54) **POLYMER PRODUCT, FILM, MOLDED ARTICLE, SHEET, PARTICLE, FIBER, AND METHOD FOR PRODUCING POLYMER**
POLYMERPRODUKT, FILM, FORMKÖRPER, FOLIE, PARTIKEL, FASER UND VERFAHREN ZUR HERSTELLUNG EINES POLYMERS
PRODUIT, FILM, ARTICLE MOULÉ, FEUILLE, PARTICULE ET FIBRE EN POLYMÈRE ET PROCÉDÉ DE PRODUCTION DU POLYMÈRE

(30) Priority: 30.04.2013 JP 2013095440
(43) Date of publication of application: 09.03.2016
(73) Proprietor: Ricoh Company, Ltd., Tokyo 143-8555 (JP)
(72) Inventor: KAMADA, Yasuo, Tokyo 143-8555 (JP); NEMOTO, Taichi, Tokyo 143-8555 (JP); ARAI, Yoko, Tokyo 143-8555 (JP); IZUMI, Satoshi, Tokyo 143-8555 (JP); TANAKA, Chiaki, Tokyo 143-8555 (JP)
(74) Representative: Lamb, Martin John Carstairs
(86) International application number: PCT/JP2014/062213
(87) International publication number: WO 2014/178442

(56) References cited:
- EP-A1- 2 365 016
- WO-A1-2011/078804
- WO-A1-2013/058525
- WO-A2-2012/049044
- JP-A- H10 504 602
- JP-A- 2013 057 050
- US-A1- 2013 066 044

## Description

### Technical Field

The present invention relates to a polymer product, and a film, molded article, sheet, particle, and fiber each containing the polymer product. A method for producing a polymer is also described.

### Background Art

Conventionally, aliphatic polycarbonate has been used in the fields of various machine parts, electrical insulating materials, automotive parts, materials of information equipments (e.g., optical disks), and safety equipment materials (e.g., helmets). As for a production method of aliphatic polycarbonate, disclosed is a method for copolymerizing ethylene oxide and carbon dioxide (see PTL 1). According to the disclosed method, a polymer is obtained at yield of 109 g by copolymerizing ethylene oxide (118 g) as a monomer and carbon dioxide in a reaction vessel filled with zinc glutarate and methylene chloride. In the case where polyethylene carbonate is produced in this method, however, a significant amount of the monomer is remained in a resulting polymer product. The monomer residues deteriorate physical properties of the polymer product, such as strength, and thermal resistance.

As for another production method of aliphatic polycarbonate, a method for polymerizing a ring-opening polymerizable monomer through ring-opening polymerization has been known. For example, polycarbonate is obtained at the polymerization rate of 90 mol% or greater by ring-opening polymerizing 2,2-dimethyltrimethylene carbonate in toluene using sec-butyllithium as an initiator at 10°C. In the case where a polymer is produced in this production method, however, about 10 mol% of the monomer is remained in a polymer product. The monomer residues may function as a hydrolysis catalyst of the polymer product, or deteriorate thermal resistance thereof.

As for a method for reducing an amount of a monomer in polyethylene carbonate, a method for ring-opening polymerizing ethylene carbonate using carbon dioxide as a compressive fluid, and 1,8-diazabicyclo[5.4.0]undec-7-ene (DBU) as a catalyst has been known (see PTL 2). According to this method, a polymer product having the residual monomer content of 900 ppm is obtained. In the case where aliphatic polycarbonate is produced through ring-opening polymerization of a ring-opening polymerizable monomer in this method, however, part of carbonate groups causes etherification due to decarboxylation, and oxide unites are generated. The generated oxide units deteriorate gas barrier properties or UV stability of a resulting polymer product.

It has been difficult to reduce both a monomer content and an oxide content in a polymer product containing aliphatic polycarbonate.

### Citation List

### Patent Literature

PTL 1: Japanese Application Laid-Open (JP-A) No. 09-301445
PTL 2: JP-A No. 2013-57050

### Summary of Invention

### Technical Problem

The present invention aims to solve the aforementioned various problems in the art, and achieve the following object. The object of the present invention is to provide a polymer product containing aliphatic polycarbonate, in which a monomer content and an oxide unit content are both reduced.

### Solution to Problem

The means for solving the aforementioned problems is as follow:
The polymer product contains aliphatic polycarbonate, wherein an oxide unit content in the aliphatic polycarbonate is 20 mol% or less, and wherein a monomer content in the aliphatic polycarbonate is 500 ppm or less where the monomer is a base of

### Solution to Problem

The means for solving the aforementioned problems is as follow:
The polymer product contains aliphatic polycarbonate, wherein an oxide unit content in the aliphatic polycarbonate is 20 mol% or less, and wherein a monomer content in the aliphatic polycarbonate is 500 ppm or less where the monomer is a base of

the aliphatic polycarbonate.

### Advantageous Effects of Invention

The present invention can provide a polymer product, in which a monomer content and an oxide unit content are both reduced.

### Brief Description of Drawings

FIG. 1 is a phase diagram depicting the state of a substance depending on temperature and pressure.
FIG. 2 is a phase diagram for defining a range of a compressive fluid in the present embodiment.
FIG. 3 is a system diagram illustrating one example of a polymerization step of a continuous system.
FIG. 4 is a system diagram illustrating one example of a polymerization step of a continuous system.
FIG. 5A is a schematic diagram illustrating a device for producing a complex.
FIG. 5B is a schematic diagram illustrating a device for producing a complex.
FIG. 6 is a schematic diagram illustrating a device for producing a complex.
FIG. 7 is a system diagram illustrating one example of a polymerization step of a batch system.
FIG. 8 is a system diagram illustrating one example of a polymer product.

It has been difficult to reduce both a monomer content and an oxide content in a polymer product containing aliphatic polycarbonate.

WO 2013/058525 describes a resin composition for encapsulating a film of a photovoltaic module comprising aliphatic polycarbonate.

US 2013/0066044 describes polycarbonate polyol compositions and EP 2365016 describes a method for producing a polymer which comprises polymerizing a ring-opening polymerizable monomer in a compressive fluid with a metal-free organic catalyst, to produce a polymer.

### Citation List

### Patent Literature

PTL 1: Japanese Application Laid-Open (JP-A) No. 09-301445
PTL 2: JP-A No. 2013-57050

### Summary of Invention

### Technical Problem

The present invention aims to solve the aforementioned various problems in the art, and achieve the following object. The object of the present invention is to provide a polymer product containing aliphatic polycarbonate, in which a monomer content and an oxide unit content are both reduced.

(referred to as a catalyst mixture, hereinafter), and a compressive fluid. First, raw materials for use in the production of the polymer, such as a ring-opening polymerizable monomer, and a catalyst mixture, are explained. In the present embodiment, the raw materials are materials from which a polymer is produced, and contains a monomer, and may further contain appropriately selected optional components, such as an initiator, and additives, according to the necessity.

### «Ring-Opening Polymerizable Monomer»

In the present embodiment, the ring-opening polymerizable monomer means a cyclic monomer used for ring-opening polymerization. The ring-opening polymerizable monomer containing carbonic acid ester is not particularly limited, and examples thereof include cyclic carbonate. Examples of the cyclic carbonate include cyclic carbonate having a five-membered ring structure, and cyclic carbonate having a six-membered ring structure. The cyclic carbonate having a five-membered ring structure tends to cause decarboxylation as a side reaction, but has high gas barrier properties. Examples of the cyclic carbonate include ethylene carbonate, propylene carbonate, and trimethylene carbonate. Among them, those having a five-membered ring structure are preferable.

In a polymerization reaction, one of the above-listed ring-opening polymerizable monomers may be sued alone, or two or more types of the above-listed ring-opening polymerizable monomer may be used in combination. Moreover, the ring-opening polymerizable monomer containing carbonic acid ester may be used in combination with another ring-opening polymerizable monomer. The aforementioned another ring-opening polymerizable monomer is not particularly limited, and examples thereof include lactide, and caprolactone.

### «Catalyst Mixture»

The catalyst mixture for use in the present embodiment contains the following Lewis acid catalyst and Lewis base catalyst. The polymer product of the present embodiment contains the Lewis acid catalyst and Lewis base catalyst.

### <<<Lewis Acid Catalyst>>>

In the present embodiment, the Lewis acid catalyst functions to accelerate a speed of a ring-opening polymerization reaction of the ring-opening polymerizable monomer containing carbonic acid ester, and means a catalyst that is Lewis acid. The Lewis acid catalyst is appropriately selected depending on the intended purpose, and examples thereof include a metal complex. Specific examples of the Lewis acid catalyst include tin octylate, tindibutylate, di(2-ethylhexanoic acid) tin salt, aluminum acetylacetonate, aluminum acetate, aluminum trichloride, tetraisopropyl titanate, tetrabutyl titanate, titanium tetrachloride, zirconium isopropoxide, antimony trioxide, boron trifluoride, iron(III) bromide, iron(III) chloride, and boron trichloride.

### <<<Lewis Base Catalyst>>>

In the present embodiment, the Lewis base catalyst functions to accelerate a speed of a ring-opening polymerization reaction of the ring-opening polymerizable monomer containing carbonic acid ester, and means a catalyst that is Lewis base. The Lewis base catalyst is appropriately selected depending on the intended purpose, and for example, it is preferably a catalyst, which contributes to a ring-opening polymerization reaction of a ring-opening polymerizable monomer to form an active intermediate with the ring-opening polymerizable monomer, and then is released and regenerated through a reaction with alcohol.

Specific examples of the Lewis base catalyst include potassium carbonate, sodium carbonate, cyclic monoamine, cyclic diamine (e.g., a cyclic diamine compound containing an amidine skeleton), a cyclic triamine compound having a guanidine skeleton, a heterocyclic aromatic organic compound containing a nitrogen atom, N-heterocyclic carbine, quinuclidine, 1,4-diazabicyclo-[2.2.2]octane (DABCO), 1,5-diazabicyclo(4,3,0)-5-nonene, 1,8-diazabicyclo[5.4.0]undec-7-ene (DBU), diazabicyclononene, 1,5,7-triazabicyclo[4.4.0]dec-5-ene (TBD), diphenylguanidine (DPG), N,N-dimethyl-4-aminopyridine (DMAP), 4-pyrrolidinopyridine (PPY), pyrrocolin, imidazole, pyrimidine, purine, and 1,3-di-tert-butylimidazole-2-ylidene (ITBU).

Among them, preferred are DABCO, DBU, DPG, TBD, DMAP, PPY, and ITBU because they have high nucleophilicity without being greatly affected by steric hindrance, or they have such boiling points that they can be removed under reduced pressure

A combination of the Lewis acid catalyst and the Lewis base catalyst, which constitute the catalyst mixture, is appropriately selected depending on the intended purpose. Note that, as for each of the Lewis acid catalyst and the Lewis base catalyst, a plurality of Lewis acid or base catalysts may be mixed. A blending ratio of the Lewis acid catalyst and the Lewis base catalyst constituting the catalyst mixture is appropriately selected depending on the characteristics of the catalysts to be mixed, and for example, the blending ratio is 1/100 to 100/1. An amount of the catalyst mixture for use cannot be collectively determined, as it varies depending on the compressive fluid for use in the production, the ring-opening polymerizable monomer for use in the production, or a combination of the catalysts to be mixed for use in the production. For example, the amount thereof is preferably 0.001 mol% to 15 mol%, more preferably 0.1 mol% to 1 mol%, and particularly preferably 0.3 mol% to 0.5 mol%, relative to 100 mol% of the ring-opening polymerizable monomer. When the amount thereof is less than 0.001 mol%, the catalysts are deactivated before completing a polymerization reaction, and therefore a polymer product having a target molecular weight may not be attained. When the amount thereof is greater than 15 mol%, it may be difficult to control a polymerization reaction.

A mechanism of a polymerization reaction using the catalyst mixture is not clear, but it is considered that the Lewis base catalyst mainly functions to initiate polymerization, and the Lewis acid catalyst functions to sift equilibrium in the reaction to the carbonate side. It is considered that generation of a polymer having a low oxide unit becomes possible owing to these two functions.

Moreover, a balance of the equilibrium in the reaction is adjusted by using the catalyst mixture of the Lewis acid catalyst and the Lewis base catalyst in the compressive fluid, without offsetting activity of each of the catalysts, and decarboxylation and generation of a cyclic oligomer can be suppressed without using an organic solvent.

### «Initiator»

The initiator is used for controlling a molecular weight of a polymer product obtained by ring-opening polymerization.

The initiator is appropriately selected depending on the intended purpose without any limitation. For example, the initiator may be mono-, di-, or polyhydric alcohol of aliphatic alcohol, or may be saturated or unsaturated alcohol, as long as the initiator is alcohol based.

Examples of the initiator include monoalcohol, polyhydric alcohol, and lactic acid ester. Examples of the monoalcohol include methanol, ethanol, propanol, butanol, pentanol, hexanol, heptanol, nonal, decanol, lauryl alcohol, myristyl alcohol, cetyl alcohol, and stearyl alcohol. Examples of the polyhydric alcohol include: dialcohol, such as ethylene glycol, 1,2-propanediol, 1,3-propanediol, 1,3-butanediol, 1,4-butanediol, hexanediol, nonanediol, tetramethylene glycol, and polyethylene glycol; and others, such as glycerol, sorbitol, xylitol, ribitol, erythritol, and triethanol amine. Examples of the lactic acid ester include methyl lactate, and ethyl lactate. These may be used alone, or in combination.

Moreover, a polymer product having an alcohol residue at a terminal thereof, such as polycaprolactonediol, and polytetramethylene glycol, may be also used as the initiator. Use of such initiator can synthesize a diblock copolymer or triblock copolymer.

An amount of the initiator for use in the polymerization step is appropriately selected depending on a target molecular weight, but the amount thereof is preferably 0.1 mol% to 5 mol% relative to 100 mol% of the ring-opening polymerizable monomer. In order to prevent polymerization from being initiated unevenly, the initiator is ideally sufficiently mixed with the ring-opening polymerizable monomer before the ring-opening polymerizable monomer is brought into contact with the catalyst.

### <<Additives>>

Additives may be optionally added for ring-opening polymerization. Examples of the additives include a surfactant, an antioxidant, a stabilizer, an UV-ray absorber, a pigment, and a colorant. As for the surfactant, a surfactant that is dissolved in a compressive fluid, and has affinity to both the compressive fluid and the ring-opening polymerizable monomer is preferably used. Use of such surfactant can give effects that the polymerization reaction can be uniformly progressed, and the resultant polymer has a narrow molecular weight distribution and be easily produced a polymer product in the form of particles. In the case where such surfactant is used, the surfactant may be added to the compressive fluid, or may be added to the ring-opening polymerizable monomer. In the case where carbon dioxide is used as a compressive fluid, for example, a surfactant containing, in a molecule thereof, a group having affinity to carbon dioxide, and a group having affinity to a monomer is used. Examples of such surfactant include a fluorosurfactant, and a silicone-based surfactant.

### <<Compressive Fluid>>

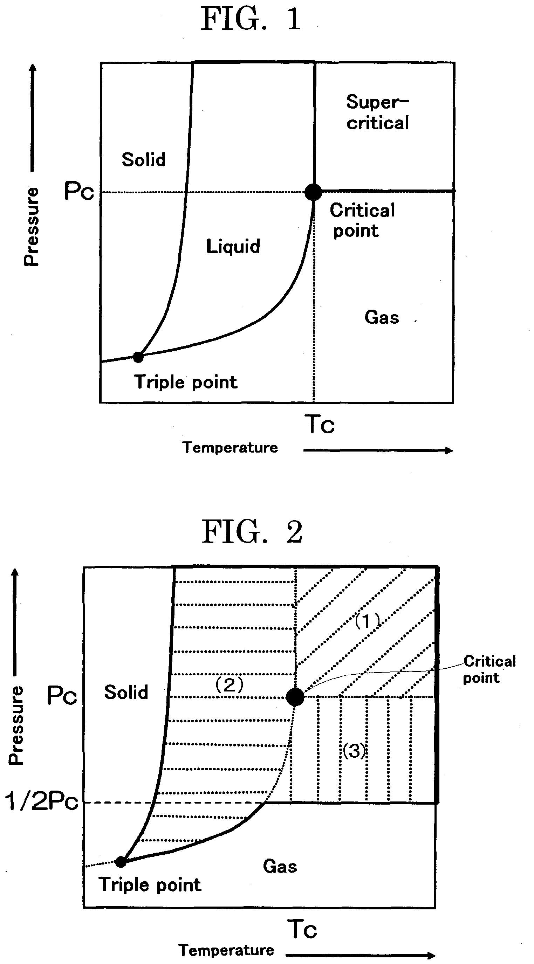

Next, a compressive fluid for use in the production of a polymer product of the present embodiment will be explained with reference to FIGs. 1 and 2. FIG. 1 is a phase diagram depicting the state of a substance depending on pressure and temperature conditions. FIG. 2 is a phase diagram which defines a range of a compressive fluid. In the present embodiment, the term "compressive fluid" refers to a state of a substance present in any one of the regions (1), (2) and (3) of FIG. 2 in the phase diagram of FIG. 1.

In such regions, the substance is known to have extremely high density and show different behaviors from those shown at normal temperature and normal pressure. Note that, a substance is a supercritical fluid when it is in the region (1). The supercritical fluid is a noncondensable fluid even under compression that exists as a noncondensable high-density fluid at temperature and pressure exceeding the corresponding critical points, which are limiting points at which a gas and a liquid can coexist. When a substance is in the region (2), the substance is a liquid, but in the present embodiment, it is a liquefied gas obtained by compressing a substance existing as a gas at normal temperature (25°C) and ambient pressure (1 atm). When a substance is in the region (3), the substance is in the state of a gas, but in the present invention, it is a high-pressure gas whose pressure is 1/2 or higher than the critical pressure (Pc), i.e. 1/2Pc or higher.

Examples of a substance for constituting the compressive fluid include carbon monoxide, carbon dioxide, dinitrogen oxide, nitrogen, methane, ethane, propane, 2,3-dimethylbutane, and ethylene. Among them, carbon dioxide is preferable because the critical pressure and critical temperature of carbon dioxide are respectively about 7.4 MPa, and about 31°C, and thus a supercritical state of carbon dioxide is easily formed. In addition, carbon dioxide is non-flammable, and therefore it is easily handled. These compressive fluids may be used alone, or in combination.

### <Polymerization Reaction Device>

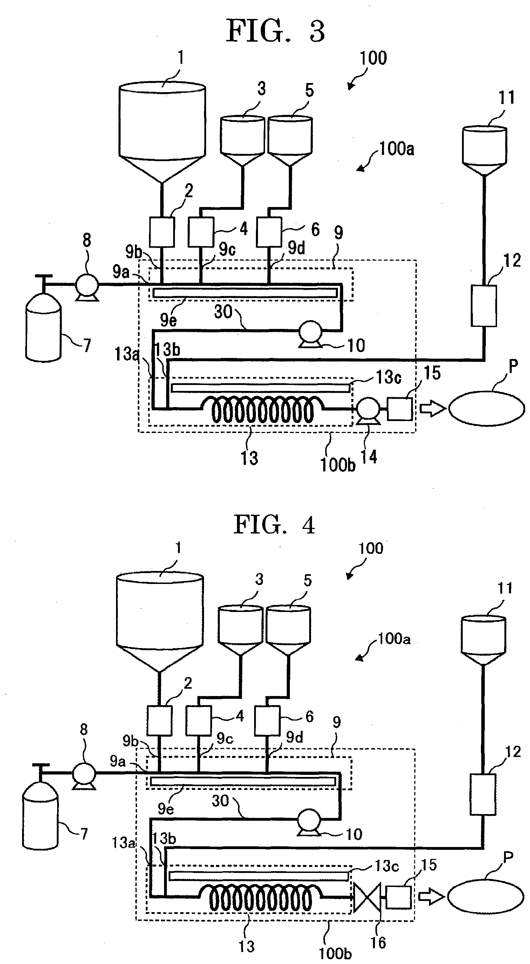

Subsequently, a polymerization reaction device for use in the production of the polymer in the present embodiment is explained with reference to FIGs. 3 and 4. FIGs. 3 and 4 are each a system diagram illustrating one example of a polymerization step.

First, the polymerization reaction device 100 is explained with reference to FIG. 3. The polymerization reaction device 100 contains a supply unit 100a configured to supply raw materials, such as a ring-opening polymerizable monomer, and to supply compressive fluid, and a polymerization reaction device main body 100b, which is one example of a polymer production device configured to polymerize the ring-opening polymerizable monomer supplied by the supply unit 100a. The supply unit 100a contains tanks (1, 3, 5, 7, 11), metering feeders (2, 4), and metering pumps (6, 8, 12). The polymerization reaction device main body 100b contains a contact unit 9 provided at one end of the polymerization reaction device main body 100b, a feeding pump 10, a reaction unit 13, a metering pump 14, and an extrusion cap 15 provided the other end of the polymerization reaction device main body 100b.

The tank 1 of the supply unit 100a stores a ring-opening polymerizable monomer. The ring-opening polymerizable monomer to be stored may be a powder or liquid. The tank 3 stores solids (powder or particles) among the materials used as the initiator, catalyst mixture, and additives. The tank 5 stores liquids among the materials used as the initiator, catalyst mixture, and additives. Alternatively, it is also possible that another tank is provided along with the tank 5, and stores solids or liquids of the catalyst mixture and additives. The tank 7 stores a compressive fluid. Note that, the tank 7 may store gas or a solid that is transformed into a compressive fluid upon application of heat or pressure during the process for supplying to the contact unit 9, or within the contact unit 9. In this case, the gas or solid stored in the tank 7 is transformed into the state of (1), (2), or (3) of FIG. 2 in the contact section 9 upon application of heat or pressure.

The metering feeder 2 measures the ring-opening polymerizable monomer stored in the tank 1 and continuously supplies the measured ring-opening polymerizable monomer to the contact unit 9. The metering feeder 4 measures the solids stored in the tank 3 and continuously supplies the measured solids to the contact unit 9. The metering pump 6 measures the liquids stored in the tank 5 and continuously supplies the measured liquids to the contact unit 9. The metering pump 8 continuously supplies the compressive fluid stored in the tank 7 to the contact unit 9 at a constant flow rate. Note that, in the present embodiment, the phrase "continuously supply" is used as a concept in reverse to a supply per batch, and means to supply in a manner that a polymer product, which is obtained through ring-opening polymerization of the ring-opening polymerizable monomer, is continuously obtained. Specifically, each material may be intermittently supplied as long as the polymer product obtained through the ring-opening polymerization of the ring-opening polymerizable monomer is continuously obtained. In the case where both the initiator and the additives are solids, moreover, the polymerization reaction device 100 may not contains the tank 5 and the metering pump 6. In the case where both the initiator and the additives are liquids, similarly, the polymerization reaction device 100 may not contains the tank 3 and the metering feeder 4.

In the present embodiment, the polymerization reaction device main body 100b is a tube-shaped device having a monomer inlet, from which a ring-opening polymerizable monomer is introduced, at one end, and an outlet, from which the polymer product obtained through polymerization of the ring-opening polymerizable monomer, at the other end. Moreover, the polymerization reaction device main body 100b further contains a compressive fluid inlet, from which a compressive fluid is introduced, at one end, and a catalyst inlet, from which a catalyst is introduced, at a position between the aforementioned one end and the other end. The devices equipped in the polymerization reaction device main body 100b are connected to each other with a pressure resistant pipeline 30, through which the raw materials, compressive fluid, or generated polymer are transported, as illustrated in FIG. 3. Moreover, each of the contact unit 9, liquid feeding pump 10, and reaction unit 13 of the polymerization reaction device has a tube-shaped member through which the aforementioned raw materials or the like are transported.

The contact unit 9 of the polymerization reaction device main body 100b is composed of a pressure resistant device or tube configured to continuously bringing the raw materials, such as the ring-opening polymerizable monomer, initiator, and additives, supplied from the tanks (1, 3, 5) into contact with the compressive fluid supplied from the tank 7, and to mix the raw materials (for example, to melt or dissolve the ring-opening polymerizable monomer and the initiator). In the present embodiment, the term "melt" means that raw materials or a generated polymer product is plasticized or liquidized with swelling as a result of the contact between the raw materials or generated polymer product, and the compressive fluid. Moreover, the term "dissolve" means that the raw materials are dissolved in the compressive fluid. In the case where the ring-opening polymerizable monomer is dissolved, a fluid phase is formed. In the case where the ring-opening polymerizable monomer is melted, a melt phase is formed. It is preferred that one phase of either the melt phase of the fluid phase be formed for uniformly carrying out a reaction. In order to carry out the reaction in the state that a ratio of the raw materials is high relative to the compressive fluid, moreover, the ring-opening polymerizable monomer is preferably melted. Note that, in the present embodiment, the raw materials, such as the ring-opening polymerizable monomer, can be continuously brought into contact with the compressive fluid at the constant ratio of concentration in the contact section 9 by continuously supplying the raw materials and the compressive fluid. As a result, the raw materials can be efficiently mixed (for example, the ring-opening polymerizable monomer and the initiator can be melted or dissolved).

The contact unit 9 may be composed of a tank-shaped device, or a tube-shaped device, but it is preferably a tube-shape device from one end of which raw materials are fed, and from the other end of which a mixture, such as a melt phase, and a fluid phase is taken out. The contact unit 9 may further contain a stirring device configured to stir the raw materials, and the compressive fluid. In the case where the contact unit 9 contains the stirring device, a single screw stirring device, a twin-screw stirring device where screws are engaged with each other, a biaxial mixer containing a plurality of stirring elements which are engaged or overlapped with each other, a kneader containing spiral stirring elements which are engaged with each other, or a static mixer is preferably used as the stirring device. Especially, the two-axial or multi-axial stirring device is preferable because there is a less amount of the deposited reaction product on the stirring device or the container, and it has self-cleaning properties. In the case where contact unit 9 does not contain the stirring device, the contact unit 9 is preferably composed of part of the pressure resistant pipeline 30. Note that, in the case where the contact unit 9 is composed of the pipeline 30, the ring-opening polymerizable monomer supplied to the contact unit 9 is preferably liquidized in advance, in order to surely mix all of the materials in the contact unit 9.

The contact unit 9 is equipped with an inlet 9a, which is one example of the compressive fluid inlet, from which the compressive fluid supplied from the tank 7 by the metering pump 8 is introduced, an inlet 9b, which is one example of the monomer inlet, from which the ring-opening polymerizable monomer supplied from the tank 1 by the metering feeder 2 is introduced, an inlet 9c, from which the powder supplied from the tank 3 by the metering feeder 4 is introduced, and an inlet 9d from which the liquid supplied from the tank 5 by the metering pump 6 is introduced. In the present embodiment, each inlet (9a, 9b, 9c, 9d) is composed of a tube-shaped member, such as a cylinder or part of the pipeline 30 configured to supply the raw materials in the contact unit 9, and a connector configured to connect pipes each configured to transport each of the raw materials or compressive fluid. The connector is not particularly limited, and selected from conventional connectors, such as reducers, couplings, Y, T, and outlets. Moreover, the contact unit 9 is equipped with a heater 9e configured to heat the supplied raw materials or compressive fluid.

The feeding pump 10 is configured to feed the mixture formed in the contact unit 9, such as the melt phase or fluid phase, to the reaction unit 13. The tank 11 stores the catalyst. The metering pump 12 configured to measure the catalyst stored in the tank 11 and to supply the measured catalyst to the reaction unit 13.

The reaction unit 13 is composed of a pressure resistant device or tube, configured to mix each of the raw materials fed by the feeding pump 10 with the catalyst supplied by the metering pump 12 to carry out ring-opening polymerization of the ring-opening polymerizable monomer. The reaction unit 13 may be composed of a tank-shaped device, or a tube-shaped device, but it is preferably a tube-shaped device, as it gives less dead space. The reaction unit 13 may further contain a stirring device configured to stir the raw materials and the compressive fluid. As for the stirring device of the reaction unit 13, preferred is a dual- or multi-axial stirrer having screws engaging with each other, stirring elements of 2-flights (rectangle), stirring elements of 3-flights (triangle), or circular or multi-leaf shape (clover shape) stirring wings, in view of self-cleaning. In the case where raw materials including the catalyst are sufficiently mixed in advance, a motionless mixer, which divides and compounds (recombines) the flows in multiple stages, can also be used as the stirring device. Examples thereof include multiflux batch mixers disclosed in Japanese examined patent application publication (JP-B) Nos. 47-15526, 47-15527, 47-15528, and 47-15533; a Kenics-type mixer disclosed in Japanese Patent Application Laid-Open (JP-A) No. 47-33166; and motionless mixers similar to those listed. In the case where reaction unit 13 has the stirring device, the reaction unit 13 is composed of part of the pressure resistant pipe 30. In this case, a shape of the pipe is not particularly limited, but it is preferably a spiral shape in view of down-sizing of the device.

The reaction unit 13 is provided with an inlet 13a, from which the raw materials mixed in the contact unit 9 are introduced, and an inlet 13b, which is one example of the catalyst inlet, from which the catalyst supplied from the tank 11 by the metering pump 12 is introduced. In the present embodiment, each inlet (13a, 13b) is composed of a tube-shaped member, such as a cylinder, and part of the pipeline 30, from which the raw materials are passed through in the reaction unit 13, and a connector for connecting pipes for supplying the raw materials and compressive fluid. The connector is not particularly limited, and selected from conventional connectors, such as reducers, couplings, Y, T, and outlets. Note that, a gas outlet for removing evaporated products may be provided to the reaction unit 13. Moreover, the reaction unit 13 may have a heater 13c for heating the fed raw materials.

FIG. 3 illustrates an example where one reaction unit 13 is provided, but the polymerization reaction device 100 may contain two or more reaction units 13. In the case where a plurality of the reaction units 13 are provided, reaction (polymerization) conditions (e.g., temperature, catalyst concentration, pressure, average retention time, and stirring speed) for each reaction unit 13 may be identical, but it is preferred that optimal conditions for each reaction unit be selected depending on the progress of the polymerization. Note that, it is not very good idea that excessively large number of the reaction units 13 is connected to give many stages, as it may extend a reaction time, or a device may become complicated. The number of stages is preferably 1 to 4, more preferably 1 to 3.

In the case where polymerization is performed by means of a device having only one reaction unit, it is typically believed that such device is not suitable for industrial production, as a degree of polymerization or an amount of monomer residue of the polymer product obtained through ring-opening polymerization of the ring-opening polymerizable monomer is unstable and tends to be varied. It is considered that the instability thereof is caused by coexistence of the raw materials having the melt viscosity of a few poises to several tends poises, and the polymerized polymer product having the melt viscosity of about 1,000 poises. In the present embodiment, on the other hand, it is possible to reduce a difference in the viscosity within the reaction unit 13 (polymerization system) as the raw material and the generated polymer product are melted (liquidized), and therefore a polymer product can be stably produced with a reduced number of stages compared to a conventional polymerization reaction device.

The metering pump 14 is configured to discharge the polymer product P polymerized in the reaction unit 13 from the reaction unit 13 through the extrusion cap 15. Note that, the polymer product P can be also discharged from the reaction unit 13 without using the metering pump 14 by utilizing the pressure difference between inside and outside the reaction unit 13. In this case, a pressure control valve 16 may be used instead of the metering pump 14, as illustrated in FIG. 4, in order to adjust the internal pressure of the reaction unit 13, or the discharging amount of the polymer product P.

Moreover, the polymerization reaction device main body 100b may contain other units. Other units are appropriately selected depending on the intended purpose without any limitation, and examples thereof include a cooling unit used for a cooling process (cooling step) of the polymer product, a drying unit used for a drying process (drying step), and an extruding unit used for a extruding process (extruding step).

The extruding unit is a unit for extruding the polymer product P obtained in the polymerization reaction device main body 100b to the outside, and examples thereof include a gear pump, a single-screw extruder, and a multi-screw extruder. Use of the extruding unit enables to take out the polymer product from the polymerization reaction device main body 100b.

Moreover, an organic solvent can be used as an entrainer in a polymerization reaction, and use of the entrainer can reduce a reaction time in some cases.

### <Polymer Production Method>

Subsequently, a production method of a polymer product in a continuous system using the polymerization reaction device 100 is explained. In the present embodiment, a polymer product is continuously obtained by continuously supplying a ring-opening polymerizable monomer, a compressive fluid, and other components selected according to the necessity, bringing them into contact with each other, and continuously allowing the ring-opening polymerizable monomer to carry out ring-opening polymerization. In this case, the metering feeders (2, 4), the metering pump 6, and the metering pump 8 are first operated to continuously supply the ring-opening polymerizable monomer, initiator, additive, and compressive fluid in the tanks (1, 3, 5, 7) to the contact unit 9. In the case where the catalyst mixture is supplied to the contact unit 9, the catalyst mixture may be supplied together with the ring-opening polymerizable monomer, initiator, and compressive fluid, or another tank may be provided to sequentially supply the catalyst mixture. As for an order for mixing the catalysts, the Lewis acid catalyst may be mixed first, or the Lewis base catalyst may be mixed first. Note that, the catalyst mixture may be added to the reaction unit 13 (adding after mixing) without adding to the contact unit 9 (adding before mixing). In this case, a polymerization rate is improved, because a contact area between the monomer and the catalyst increases as the catalyst is added to a homogeneous phase which is in the state where the monomer is completely melted.

As a result of above, the raw materials and the compressive fluid are continuously introduced into the tube of the contact unit 9 from the respective inlets (9a, 9b, 9c, 9d). Note that, the solid (powder or particles) raw materials may have low accuracy in measuring compared to the liquid raw materials. In this case, the solid raw materials are melted in advance and stored in the state of the liquid in the tank 5, to thereby introduce into the tube of the contact unit 9 using the metering pump 6. An order for operating the metering feeders (2, 4), metering pump 6, and metering pump 8 is not particularly limited, but the metering pump 8 is preferably operated first, because the raw materials may be solidified due to reduction in temperature, if the initial raw materials are sent to the reaction unit 13 without being in contact with the compressive fluid.

The feeding speed of each raw material by each of the metering feeders (2, 4), and the metering pump 6 is adjusted to give a constant ratio based on the predetermined blending ratio of the ring-opening polymerizable monomer, initiator, catalyst, and additives. A total mass of the raw materials supplied by the metering feeders (2, 4) and the metering pump 6 per unit time (feeding speed of the raw materials (g/min)) is adjusted based on the desired physical properties of a resulting polymer, and reaction time. Similarly, a mass of the compressive fluid supplied by the metering pump 8 per unit time (feeding speed of the compressive fluid (g/min)) is adjusted based on the desired physical properties of a resulting polymer, and reaction time. A ratio of the feeding speed of the raw materials to the feeding speed of the compressive fluid (feeding speed of raw materials / feeding speed of compressive fluid, which is referred to as a feeding ratio) is appropriately selected depending on the intended purpose without any limitation, but it is preferably 1 or greater, more preferably 3 or greater, even more preferably 5 or greater, and particularly preferably 10 or greater. Moreover, the upper limit of the feeding ratio is appropriately selected depending on the intended purpose without any limitation, but it is preferably 1,000 or less, more preferably 100 or less, and particularly preferably 50 or less.

By setting the feeding ratio to 1 or greater, a reaction progresses with the high concentration of the raw materials and a polymer product as generated (i.e. high solid content), when the raw materials and the compressive fluid are sent to the reaction unit 13. The solid content in the polymerization system here is largely different from a solid content in a polymerization system where polymerization is performed by dissolving a small amount of a ring-opening polymerizable monomer in a significantly large amount of a compressive fluid in accordance with a conventional production method. The production method of the present embodiment is characterized by that a polymerization reaction progresses efficiently and stably in a polymerization system having a high solid content. Note that, in the present embodiment, the feeding ratio may be less than 1. Even in this case, there is no problem in qualities of a resulting polymer product, but economic efficiency thereof is not satisfactory. When the feeding ratio is greater than 1,000, moreover, there is a possibility that the compressive fluid may not sufficiently dissolve the ring-opening polymerizable monomer therein, and the intended reaction may not be uniformly carried out.

The raw materials and the compressive fluid are continuously brought into contact with each other, as the raw materials and the compressive fluid are each continuously introduced into the pipe of the contact unit 9. As a result, each of the raw materials, such as the ring-opening polymerizable monomer, initiator, and additives, are mixed in the contact unit 9. In the case where the contact unit 9 is equipped with a stirring device, the raw materials and the compressive fluid may be stirred. In order to prevent the introduced compressive fluid from turning into gas, the internal temperature and pressure of the pipe of the reaction unit 13 are controlled to the temperature and pressure both equal to or higher than at least a triple point of the compressive fluid. In this case, the ring-opening polymerizable monomer and the compressive fluid are brought into contact with each other at the pressure of 3 MPa or greater, more preferably 7.4 MPa or greater. Note that, the pressure is controlled, for example, by adjusting a flow rate of the pump, a diameter of the pipe, a length of the pipe, or a shape of the pipe. Moreover, the control can be achieved by adjusting output of the heated 9e of the contact unit 9, or the feeding speed of the compressive fluid. In the present embodiment, the temperature for melting the ring-opening polymerizable monomer may be the temperature equal to or lower than the melting point of the ring-opening polymerizable monomer at atmospheric pressure. It is assumed that the internal pressure of the contact unit 9 becomes high under the influence of the compressive fluid so that the melting point of the ring-opening polymerizable monomer becomes lower than the melting point thereof under the atmospheric pressure. Accordingly, the ring-opening polymerizable monomer is melted in the contact unit 9, even when an amount of the compressive fluid is small with respect to the ring-opening polymerizable monomer.

In order to mix the raw materials efficiently, the timing for applying heat to , or stirring the raw materials and the compressive fluid in the contact unit 9 may be adjusted. In this case, heating or stirring may be performed after bringing the raw materials and the compressive fluid into contact with each other, or heating or stirring may be performed while bringing the raw materials and the compressive fluid into contact with each other. To make mixing even better, for example, the ring-opening polymerizable monomer and the compressive fluid may be brought into contact with each other after heating the ring-opening polymerizable monomer at the temperature equal to or higher than the melting point thereof. Each of the aforementioned embodiments for mixing is realized, for example, appropriately setting an alignment of screws, arrangement of inlets (9a, 9b, 9c, 9d), and the temperature of the heater 9e, in the case where the contact unit 9 is a biaxial blending device.

In the present embodiment, the additives are supplied to the contact unit 9, separately from the ring-opening polymerizable monomer, but the additives may be added together with the ring-opening polymerizable monomer. Moreover, the additives may be supplied after completing the polymerization reaction. In this case, the additives can be adding with kneading, after taking out the polymer product from the reaction unit 13.

The raw materials mixed in the contact unit 9 are sent by the feeding pump 10, and supplied to the reaction unit 13 from the inlet 13a. In the case where the catalyst mixture is added after mixing, the catalyst mixture in the tank 11 is measured by the metering pump 12, and the predetermined amount of the catalyst mixture is supplied to the reaction unit 13 from the inlet 13b.

The raw materials and the catalyst mixture are optionally sufficiently stirred by a stirring device of the reaction unit 13, or heated to the predetermined temperature (polymerization reaction temperature) by the heater 13c during transported. As a result, the ring-opening polymerizable monomer is polymerized through ring-opening polymerization in the reaction unit 13 in the presence of the catalyst mixture (polymerization step). The polymerization reaction temperature is appropriately selected depending on the intended purpose without any limitation, but it is preferably 200°C or lower, more preferably 40°C to 180°C. When the polymerization reaction temperature is higher than 200°C, a depolymerization reaction, which is a reverse reaction of ring-opening polymerization, tends to be caused equilibrately, hence the polymerization reaction is difficult to proceed quantitatively, and moreover, a resulting polymer product may be tinted. When the polymerization reaction temperature is lower than 40°C, it may be take a long time to melt the ring-opening polymerizable monomer with the compressive fluid depending on a type of the ring-opening polymerizable monomer for use, melting may be insufficient, or an activity of the catalyst may be low. As a result, the reaction speed may be reduced during the polymerization, and therefore it may not be able to proceed to the polymerization reaction quantitatively. Note that, the polymerization reaction temperature is controlled, for example, by heating with a heater equipped with the polymerization reaction device, or heating externally.

In a conventional production method of a polymer product using supercritical carbon dioxide, polymerization of a ring-opening polymerizable monomer is carried out using a large amount of the supercritical carbon dioxide, as supercritical carbon dioxide has low ability of dissolving the polymer product. In accordance with the polymerization method of the present embodiment, ring-opening polymerization of a ring-opening polymerizable monomer is performed with a high concentration, which has not been realized in conventional methods, in the production of a polymer product using a compressive fluid. In this case, the internal pressure of the reaction unit 13 becomes high in the presence of the compressive fluid, and the glass transition temperature (Tg) of the generated polymer product reduces to reduce the viscosity of the polymer product, and therefore the ring-opening polymerization reaction progresses uniformly even in the state where the concentration of the polymer product is high.

In the present embodiment, the polymerization reaction time (the average retention time in the reaction unit 13) is appropriately set depending on a target molecular weight, but it is typically preferably 1 hour or shorter, more preferably 45 minutes or shorter, and even more preferably 30 minutes or shorter. In accordance with the production method of the present embodiment, the polymerization reaction time can be made within 20 minutes. This polymerization reaction time is short, which has not been realized before in polymerization of a ring-opening polymerizable monomer in a compressive fluid.

The moisture content in the reaction unit 13 is preferably 4 mol% or less, more preferably 1 mol% or less, and particularly preferably 0.5 mol% or less, relative to 100 mol% of the ring-opening polymerizable monomer. When the moisture content is greater than 4 mol%, it may be difficult to control a molecular weight of a resulting product as the moisture itself acts as an initiator. In order to control the moisture content in the polymerization system, an operation for removing moistures contained in the ring-opening polymerizable monomer and other raw materials may be optionally provided as a pretreatment.

The polymer product P, which has completed the ring-opening polymerization reaction in the reaction unit 13, is discharged from the reaction unit 13 by the metering pump 14. The speed for discharging the polymer product P by the metering pump 14 is preferably set constant by setting the pressure in the polymerization system, which is filled with the compressive fluid, constant to operate and attain a uniform polymer product. To this end, the feeding system inside the reaction unit 13 and the feeding rate of the feeding pump 10 are controlled to make the back pressure of the metering pump 14 constant. In order to maintain the back pressure of the heeding pump 10 constant, similarly, the feeding system inside the contact unit 9, the feeding speed of the metering feeders (2, 4), and metering pumps (6, 8) are controlled. The control system may be an ON-OFF control system, i.e., an intermittent feeding system, but it is in most cases preferably a continuous or stepwise control system where the rational speed of the pump or the like is gradually increased or decreased. Any of these controls realizes to stably provide a uniform polymer product.

The catalyst remained in the polymer product obtained in the present embodiment is removed according to the necessity. The removal method is not particularly limited, and examples thereof include vacuum distillation, and extraction using a compressive fluid. In the case where the vacuum distillation is performed, the vacuuming conditions are set based on the boiling point of the catalyst. For example, the temperature for vacuuming is 100°C to 120°C, and the catalyst can be removed at temperature lower than the temperature at which the polymer product is depolymerized. Therefore, the compressive fluid is preferably used as a solvent in the extraction process. As for such extraction process, a conventional technique, such as extraction of perfume, can be applied.

### <Properties of Polymer Product>

Various properties of the polymer product obtained in the aforementioned production method are explained. <<Ring-Opening Polymerizable Monomer Content>>

In the present embodiment, the ring-opening polymerizable monomer (ring-opening polymerizable monomer containing carbonic acid ester) content in the polymer product is preferably 500 ppm or less, more preferably 200 ppm or less, where the ring-opening polymerizable monomer is a base of aliphatic polycarbonate. Note that, the ring-opening polymerizable monomer containing carbonic acid ester, which is contained in the polymer product, include the unreacted ring-opening polymerizable monomer as a raw material, and a ring-opening polymerizable monomer generated as a result of a depolymerization reaction, namely, monomer residues. When the ring-opening polymerizable monomer content is greater than 500 ppm, thermal properties or durability of a resulting polymer product may be insufficient. Examples of a measuring method of the monomer residue content include the method in Examples, which is described later.

### <<Oxide Unit Content>>

In the present embodiment, the oxide unit means an ether group contained in the polymer product. Moreover, the oxide unit content means a molar ratio represented by the following equation.

Oxide unit content (mol%) = number of ether groups contained in aliphatic polycarbonate / (number of ether groups contained in aliphatic polycarbonate + number of carbonate groups contained in aliphatic polycarbonate)

The oxide unit content in the polymer product is preferably 20 mol% or less, more preferably 15 mol% or less, even more preferably 10 mol% or less, and particularly preferably 5 mol% or less. When the oxide unit content is greater than 20 mol%, gas barrier properties, or UV and thermal stability may be degraded. Examples of a measuring method of the oxide unit content include a method in Examples, which will be described later.

### <<Cyclic Oligomer Content>>

In the present embodiment, the cyclic oligomer means cyclic polycarbonate having a relatively low molecular weight. Note that, the cyclic polycarbonate having a relatively low molecular weight means, for example, cyclic polycarbonate, in which 100 or less monomers are bonded. In the case where polycarbonate is produced through living polymerization, a side reaction, in which the alkaline initiator attacks the carbonate bond in the molecule of the generated polymer chain, is caused, and as a result, cyclic oligomer is generated. The cyclic oligomer tints polycarbonate, and heat resistance, and hydrolysis resistance of the polycarbonate are reduced to increase occurrences of decomposition of the polycarbonate, or out gassing, and physical properties thereof are impaired. In accordance with the production method of the present embodiment, the ring-opening polymerization of the ring-opening polymerizable monomer is performed in the presence of the catalyst mixture and the compressive fluid, as a result, generation of cyclic oligomers as a by-product can be prevented.

The cyclic oligomer content in the polymer product is preferably 10,000 ppm or less, more preferably 5,000 ppm or less, and particularly preferably 1,000 ppm or less. When the cyclic oligomer content is greater than 10,000 ppm, it is not preferable as physical properties of a polymer product may be adversely affected, such as it is tinted, heat resistance and hydrolysis resistance thereof are reduced, thermal stability thereof is reduced to decompose polycarbonate, and out-gassing is increased. Examples of a measuring method of the cyclic oligomer content in the polymer product include a method in Examples, which is described later.

### <<Weight Average Molecular Weight>>

The weight average molecular weight (Mw) of the polymer product of the present embodiment, as measured by gel permeation chromatography is 1,000 or greater, preferably 5,000 or greater, and more preferably 10,000 or greater. When the weight average molecular weight thereof is smaller than 1,000, mechanical strength of a polymer product is insufficient, and it may take a long time to shape, as crystallization speed thereof is slow. The upper limit of the weight average molecular weight (Mw) of the polymer product is not particularly limited, but it is, for example, preferably 1,000,000 or smaller, preferably 600,000 or smaller, in view of moldability . Examples of a measuring method of the weight average molecular weight of the polymer product include a method in Examples, which is described later.

### <<Molecular Weight Distribution>>

The molecular weight distribution (Mw/Mn), which is a value obtained by dividing a number average molecular weight Mn of the polymer product by the weight average molecular weight Mw of the polymer product, is appropriately selected depending on the intended purpose without any limitation, but it is preferably 1.0 to 2.5, more preferably 1.2 to 2.0. When the molecular weight distribution (Mw/Mn) is greater than 2.5, a low molecular weight component increases, and the gas barrier properties of a polymer product may be reduced. A measuring method of the molecular weight distribution (Mw/Mn) is not particularly limited, but the molecular weight distribution can be measured by gel permeation chromatography (GPC) under the following conditions.
Apparatus: GPC-8020 (product of TOSOH CORPORATION)
Column: TSK G2000HXL and G4000HXL (product of TOSOH CORPORATION)
Temperature: 40°C
Solvent: Chloroform
Flow rate: 0.5 mL/min

A sample (1 mL) having a concentration of 0.5% by mass is injected to measure a molecular weight distribution of a polymer product under the above conditions. A number average molecular weight (Mn) and weight average molecular weight (Mw) of the polymer product are calculated with reference to a molecular weight calibration curve obtained using a monodisperse polystyrene standard sample. The molecular weight distribution is a value obtained by dividing Mw by Mn.

### <Use of Polymer Product>

The polymer product of the present invention contains fewer oxide units and has excellent gas barrier properties, as described above. Therefore, the polymer product can be formed into, for example, particles, a film, a sheet, a molded article, or fibers, and can be widely used as daily commodities, industrial materials, agricultural products, sanitation materials, medical and pharmaceutical products, cosmetic products, electrophotographic toners, packaging materials, materials of electric appliances, housings of household appliances, and materials of automobiles.

Moreover, the polymer product of the present embodiment can be also produced by a method without using an organic solvent. In this case, the polymer product is substantially free from the organic solvent, and has excellent safety and stability. In the present embodiment, the organic solvent is a solvent, which is organic and used for ring-opening polymerization. In the case where the polymer product obtained through a ring-opening polymerization reaction is polyethylene carbonate, examples of the organic solvent include toluene, such as chloroform, and methylene chloride, and tetrahydrofuran. The phrase "substantially free from the organic solvent" means that the organic solvent content in the polymer product as measured by the following measuring method is specifically less than the detection limit (less than 5 ppm).

### [Measuring Method of Residual Organic Solvent]

To 1 part by mass of the polymer product to be measured, 2 parts by mass of 2-propanol is added, and dispersed by ultrasonic wave for 30 minutes. Thereafter, the resultant is stored in a refrigerator (5°C) for 1 day or longer, to thereby extract the organic solvent contained in the polymer product. The supernatant liquid is analyzed by gas chromatography (GC-14A, manufactured by Shimadzu Corporation) to determine the amount of the organic solvent and the residual monomers in the polymer product. Thus, the concentration of the organic solvent is measured. The measurement conditions of the analysis are as follows:
Device: Shimadzu GC-14A
Column: CBP20-M 50-0.25
Detector: FID
Injection volume: 1 µL to 5 µL
Carrier gas: He 2.5 kg/cm²
Flow rate of hydrogen: 0.6 kg/cm²
Flow rate of air: 0.5 kg/cm²
Chart speed: 5 mm/min
Sensitivity: Range 101 × Atten 20
Column temperature: 40°C
Injection temperature: 150°C

### (Compact of Polymer Product)

Subsequently, a compact obtained by shaping the polymer product produced in the aforementioned production method, such as particles, a film, a sheet, a molded article, and fibers, is explained.

### <Particles>

Examples of a method for forming the polymer product obtained in the aforementioned production method into particles include a method for pulverizing the polymer product in accordance with a conventional technique. Diameters of the particles are not particularly limited, but they are typically 1 µm to 50 µm. In the case where the particles of the compact are an electrophotographic toner, moreover, a mixture, in which a colorant and hydrophobic particles are mixed in the polymer product, is produced. Other than the binder resin, the colorant, and the hydrophobic particles, the mixture may contain other additives. Examples of other additives include a releasing agent, and a charge controlling agent. The additive may be mixed at the same time as the polymerization reaction, or mixed during the step after the polymerization reaction, or mixed while melt-kneading the polymer product after taking out the polymer product. Examples of other particles include DDS (Drug Delivery System).

### <Film>

In the present embodiment, the film is an article formed by forming the polymer product into a thin film, and has a thickness of less than 250 µm. In the present embodiment, the film is produced by stretching the polymer product obtained in the aforementioned production method.

In this case, the stretching process is not particularly limited, but monoaxial stretching applied for general plastic, and simultaneous or sequential biaxial stretching (e.g., a tubular method, and a tenter method).

The formation of the film is typically carried out in the temperature range of 150°C to 280°C. The formed film is subjected to monaxial or biaxial stretching by a roll method, a tenter method, or a tubular method. The temperature for the stretching is typically 30°C to 110°C, preferably 50°C to 100°C. The magnification of the stretching is typically 0.6 times to 10 times each in a longitudinal direction and a transverse direction. Moreover, a heat treatment may be performed after the stretching, and examples of the heat treatment include a method for blowing hot air, a method for applying infrared rays, a method for applying microwaves, and a method for bringing into contact with a heat roller.

As a result of the aforementioned stretching, various types of the stretched film, such as a stretched sheet, a flat yarn, a stretched tape or band, a tape with linear supports, and a split yarn, can be attained. A thickness of the stretched film is appropriately selected depending on the intended use of the film, but it is typically 5 µm or greater, but less than 250 µm.

Note that, the formed stretched film may be subjected to various treatments for various purposes in order to impart a chemical function, electrical function, magnetic function, mechanical function, frictional, abrasive or lubricant function, optical function, thermal function, or surface function such as biocompatibility. Examples of the secondary treatment include embossing, coating, bonding, printing, metalizing (plating etc.), machining, and surface treatments (e.g., an antistatic treatment, a corona discharge treatment, a plasma treatment, a photochromism treatment, physical vapor deposition, chemical vapor deposition, and coating).

The stretched film obtained in the present embodiment uses the polycarbonate produced in the production method which does not use an organic solvent, and therefore the stretched film does not contain the organic solvent. Moreover, the stretched film has an extremely low cyclic oligomer content, which is 10,000 ppm or less, and the ring-opening polymerizable monomer (residues) content of 500,000 ppm or less. Therefore, the stretched film has excellent safety and gas barrier properties. Accordingly, the stretched film of the present embodiment is widely applied in various uses, such as medical use, food packaging, daily commodities, materials of electric appliances, housings of household appliances, and materials of automobiles. Particularly, the stretched film is effective for packaging a material, which is easily influenced by oxygen, or is possibly deteriorated, including food.

### <Sheet and Molded Article>

In the present embodiment, a sheet is an article obtained by forming the polymer product into a thin film, and has a thickness of 250 µm or greater. In the present embodiment, a sheet is produced by applying a conventional sheet production method for a thermoplastic resin to the polymer product obtained in the aforementioned production method. The method is not particularly limited, and examples thereof include a T-die method, an inflation method, and a calendaring method. Conditions for processing the polymer product into the sheet are appropriately determined depending on a type of the polymer product or a device for use. In the case where polylactic acid is processed by a T-die method, for example, sheet processing can be performed by extruding the polymer product heated, preferably to the range of 150°C to 250°C, by means of an extrusion molding device disposed at an outlet of the T-die, thereby discharging the polymer product from the T-die as a sheet.

In the present embodiment, the molded article is an article, which has been processed using a mold. The definition of the molded article includes parts formed of a molded article, such as handles of a tray, and a product equipped with a molded article, such as a tray provided with handles, as well as a molded article itself.

The processing method is not particularly limited, and the processing can be performed in a conventional method for a thermoplastic resin. Examples thereof include injection molding, vacuum molding, compression molding, vacuum compression molding, and press molding. A molded article can be obtained by melting the polymer product obtained in the aforementioned production method, followed by injection molding. Moreover, a molded article may be obtained by press molding the sheet obtained in the aforementioned production method using a mold to give a shape. The processing conditions for giving a shape are appropriately determined depending on a type of the polymer product, and a device for use. In the case where a shape is given to the sheet of the polylactic acid of the present embodiment by press molding using a mold, for example, temperature of the mold can be set in the range of 100°C to 150°C. In the case where a shape is given by injection molding, the polymer product heated to the temperature of 150°C to 250°C is injected into a mold, the temperature of the mold is set to the range of about 20°C to the 80°C, to perform the processing by the inject molding.

The polycarbonate, which has been conventionally used for general purposes, had large residual rates of a metal catalyst, organic solvent, and monomer. In the case where such polycarbonate is heated and formed into a sheet, for example, an appearance of a resulting sheet may be impaired as the remained foreign matter, such as a metal catalyst, organic solvent, and monomer, is appeared as a shape of fish eyes, or strength of the sheet may be reduced. In the case where such polycarbonate is shaped by molding, or injection molding, similarly, the appearance may be impaired, or strength may be reduced.

On the other hand, the sheet and molded article of the present embodiment uses the polycarbonate produced in the production method, which does not use an organic solvent, are free from the organic solvent, has an extremely low organic oligomer content, which is 10,000 ppm or less, and has a residual ring-opening polymerizable monomer content of 500 ppm or less. Therefore, the sheet and molded articles have excellent safety and gas barrier properties. Accordingly, the sheet and molded article of the present embodiment are widely used as a sheet, packaging material, or tray for industrial materials, daily commodities, agricultural products, food, medical and pharmaceutical products, and cosmetic products, although use thereof is not particularly limited. In the case where the obtained polymer product is a polymer having biodegradability, such as polylactic acid, and polycaprolactone, the polymer product can be effective for uses by which the polymer product may be taken into human bodies, such as packaging materials used for foods, cosmetic products, and medical sheets for pharmaceutical products, by utilizing the characteristic thereof that an organic solvent and metal atom are not contained therein.

### <Fibers>

The polymer product obtained in the aforementioned production method can be also applied for fibers, such as monofilaments, and multifilaments. Note that, in the present embodiment, the definition of the fibers include not only sole fibers, such as monofilaments, but also an intermediate product constituted of fibers such as a woven fabric, and nonwoven fabric, and a product containing a woven fabric or nonwoven fabric, such as a mask.

In the present embodiment, in the case of monofilaments of the fibers, the fibers are produced by melt spinning the polymer product obtained in the aforementioned production method, cooling, and drawing in accordance with a conventional method, to thereby form the polymer product into fibers. Depending on use, a coating layer may be formed on each monofilament in accordance with a conventional method, and the coating layer may contain an antifungal agent, and a colorant. In the case of a nonwoven fabric, moreover, the fibers are produced, for example, by melt spinning the polymer product, cooling, stretching, splitting, depositing, and performing a heat treatment, to thereby form the polymer product into a nonwoven fabric. The polymer product may contain additives such as an antioxidant, a flame retardant, an UV absorber, an antistatic agent, an antifungal agent, and a binder resin. The additives may be mixed during the polymerization reaction, or in a post step after the polymerization reaction. Alternatively, the additives may be added to and mixed with the polymer product taken out from the reaction vessel, during the melt-kneading.

The fibers obtained in the present embodiment uses the polycarbonate produced in the production method that does not use an organic solvent, is free from the organic solvent, has an extremely low cyclic oligomer content, which is 10,000 ppm or less, and has a residual ring-opening polymerizable monomer content of 500 ppm or less. Therefore, the fibers have excellent safety and gas barrier properties. Accordingly, the fibers of the present embodiment are widely applied in various uses of monofilaments, such as fishing lines, fishing nets, surgical sutures, medical materials, materials of electrical machinery and apparatus, automotive materials, and industrial materials. Further, the fibers of the present embodiment are widely applied in various uses of a nonwoven fabric, such as fishery or agricultural materials, civil engineering and construction materials, interior accessories, automotive members, wrapping materials, commodities, and sanitary materials.

### (Other Embodiments of Polymer Product)

### <Second Embodiment>

Subsequently, aspects of the second embodiment, which are different from the aforementioned first embodiment, are explained. In the production method of the first embodiment, a reaction progresses quantitatively without leaving hardly any monomer residues. Using the aforementioned characteristics, in the first method of the second embodiment, a polymer product as a composite is synthesized by using the polymer product produced in the production method of the first embodiment, and further adding one or more types of the ring-opening polymerizable monomer. In the second method of the second embodiment, moreover, a complex is formed by continuously mixing two or more polymers including the polymer product produced in the production method of the first embodiment in the presence of a compressive fluid. Note that, in the present embodiment, the term "composite" means a copolymer containing two or more polymer segments obtained by performing polymerization of a monomer in a plurality stages, or a mixture of two or more polymer products obtained by performing polymerization of a monomer in a plurality of stages.

As one example of the complex, a method for producing a copolymer with lactide is explained hereinafter.

### <<First Method and Device>>

In accordance with the first method, a first ring-opening polymerizable monomer is polymerized through ring-opening polymerization by a polymerization step that is identical to that in the first embodiment (first polymerization step), to thereby obtain a first polymer product. The obtained first polymer product and a second ring-opening polymerizable monomer are continuously brought into contact with each other, to polymerize the first polymer product and the second ring-opening polymerizable monomer (second polymerization step). Note that, the first method may further contain other steps according to the necessity.

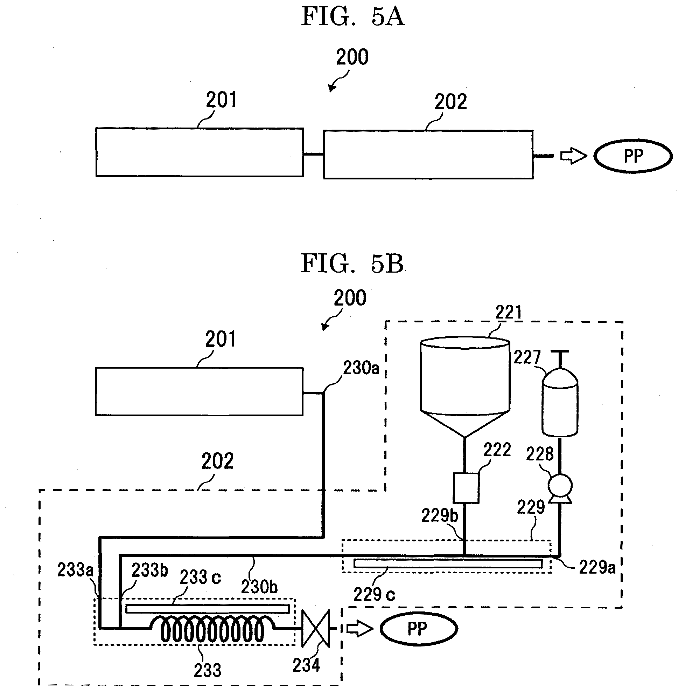

The production of the polymer product according to the first method can be realized by means of a complex production device 200 illustrated in FIGs. 5A and 5B. FIGs. 5A and 5B each are a schematic diagram illustrating a complex production device. As illustrated in FIG. 5A, the complex production device 200 contains a first polymerization reaction device 201 having the same structure to that of the polymerization reaction device 100, and a second polymerization reaction device 202. The precise structure of the second polymerization reaction device is illustrated in FIG. 5B. The second polymerization reaction device 202 contains tanks (221, 227), a metering feeder 222, a metering pump 228, a contact unit 229, a reaction unit 233, and a pressure control valve 234.

The tank 221 stores the second ring-opening polymerizable monomer. Note that, in the first method, the second ring-opening polymerizable monomer is a ring-opening polymerizable monomer, which is different from the first ring-opening polymerizable monomer. The second ring-opening polymerizable monomer can be selected from those listed as the ring-opening polymerizable monomer above, and examples thereof include lactide, and caprolactone. The tank 227 stores the compressive fluid. The compressive fluid stored in the tank 227 is not particularly limited, but it is preferably identical to the compressive fluid used in the first polymerization reaction device 201, in order to carry out a polymerization reaction uniformly. Note that, the tank 227 may store gas or a solid that is transformed into a compressive fluid upon application of heat or pressure during the process for supplying to the contact unit 229, or within the contact unit 229. In this case, the gas or solid stored in the tank 227 is transformed into the state of (1), (2), or (3) of FIG. 2 in the contact unit 229 upon application of heat or pressure.

The metering feeder 222 measures the second ring-opening polymerizable monomer stored in the tank 21 and continuously supplies the measured second ring-opening polymerizable monomer to the contact unit 229. The metering pump 228 continuously supplies the compressive fluid stored in the tank 227 to the contact unit 229 at the constant pressure and constant flow rate.

The contact unit 229 is composed of a pressure resistant device or pipe configured to continuously bring the second ring-opening polymerizable monomer supplied from the tank 221 into contact with the compressive fluid supplied from the tank 227 to thereby dissolve or melt the raw materials. To a container of the contact unit 229, an inlet 229a, from which the compressive fluid supplied from the tank 227 by the metering pump 228 is introduced, and an inlet 229b, from which the second ring-opening polymerizable monomer supplied from the tank 221 by the metering feeder 222 is introduced, are provided. To the contact unit 229, moreover, a heater 229c configured to heat the supplied second ring-opening polymerizable monomer and compressive fluid is provided. Note that, as for the contact unit 229, a unit similar to the contact unit 9 of the polymerization reaction device 100 is used.

The reaction unit 233 is composed of a pressure resistant pipe or pipe-shaped device, and is equipped with an inlet 233a, from which the dissolved or melted first polymer product as an intermediate product is introduced, and an inlet 233b, from which the second ring-opening polymerizable monomer dissolved or melted in the contact unit 229 is introduced at one end of the reaction unit 233. The inlet 233a is connected to the outlet of the first polymerization reaction device 201 with the pressure resistant pipeline 230a. Here, the outlet of the first polymerization reaction device 201 means an outlet, such as an edge of the pipe or cylinder of the reaction unit of the first polymerization reaction device 201, an outlet of the metering pump, and an outlet of the pressure control valve 16. In any case, the polymer product generated in the first polymerization reaction device 201 can be supplied to the reaction unit 233 without returning back to atmospheric pressure.

At the other end of the reaction unit 233, moreover, a complex outlet, from which the complex product obtained by polymerizing the first polymer product and the second ring-opening polymerizable monomer is discharged, is provided. Moreover, the reaction unit 233 is equipped with a heater 233c configured to heat the complex product obtained by polymerizing the fed polymer product and second ring-opening polymerizable monomer. Note that, in the present embodiment, the one identical to the reaction unit 13 in the polymerization reaction device 100 is used as the reaction unit 233. The pressure control valve 234 configured to discharge the complex product PP polymerized in the reaction unit 233 out of the reaction unit 233 by utilizing pressure difference between inside and outside the reaction unit 233.

Note that, a complex product PP containing three or more segments can be obtained by tandemly and repeatedly providing the polymerization reaction device 202 of FIG. 5B.

In the first method, the first ring-opening polymerizable monomer (e.g., ethylene carbonate) is polymerized at temperature lower than the melting point thereof in the first polymerization reaction device 201, and after completing the reaction quantitatively, the second ring-opening polymerizable monomer (e.g., lactide) is further polymerized at the temperature higher than the melting point thereof in the second polymerization reaction device 202. As a result, a copolymer is obtained. The first method is very effective, as a reaction can be carried out at temperature equal to or lower than the ring-opening polymerizable monomer with a small amount of the monomer residues, and a copolymer can be generated quantitatively.

### <<Second Method and Device>>

The second method, which is a production method of a polymer product, contains continuously mixing two or more polymer products in the presence of a compressive fluid (mixing step), and may further contain other steps according to the necessity. Examples of the aforementioned two or more polymer products include a combination of the first polymer product obtained through ring-opening polymerization of the first ring-opening polymerizable monomer, and a second polymer product obtained through ring-opening polymerization of a second ring-opening polymerizable monomer.

The complex production device for use in the second method contains a blending device configured to continuously mix two or more polymer products in the presence of a compressive fluid, and may further contains other devices according to the necessity. The complex production device is a tube-shaped blending vessel containing, at one end (upstream side), two or more inlets from which two or more polymer products are introduced, and at the other end, a complex outlet, from which a complex obtained by mixing the two or more polymer products is discharged. The two or more inlets are preferably connected to two or more outlets of the two or more polymer production device, respectively. The production of the polymer product can be suitably performed by this complex production device.

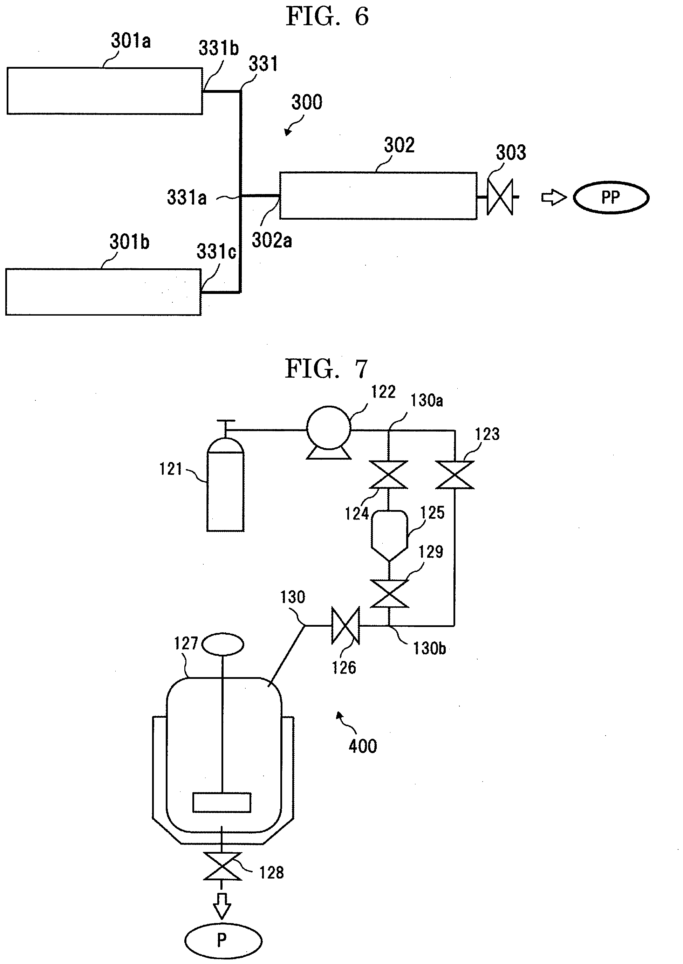

Subsequently, the complex production device for use in the second method is explained with reference to FIG. 6. FIG. 6 is a schematic diagram illustrating a complex production device. The complex production device 300 contains polymerization reaction devices (301a, 301b) each of which has the identical structure to that of the polymerization reaction device 100, a blending device 302, and a pressure control valve 303.

In the complex production device 300, a polymer product inlet 302a of the blending device 302 is connected to outlets (331b, 331c) of the polymerization reaction devices (301a, 301b) with a pressure resistant pipeline 331. Here, the outlets of the polymerization reaction devices (301a, 301b) mean an edge of pipe or cylinder of the reaction unit, an outlet of a metering pump, or an outlet of a pressure control valve. In any case, the polymer products P generated in the polymerization reaction devices (301a, 301b) can be supplied to the blending device 302 without returning to the ambient pressure. As a result, the viscosity of each polymer product P is reduced in the presence of the compressive fluid, and therefore the two or more polymer products can be mixed in the blending device 302 at lower temperature. Note that, FIG. 6 illustrates an example there two polymerization reaction devices (301a, 301b) are provided in parallel by providing only one connector 331a to the pipeline 331, but three or more polymerization reaction devices may be provided in parallel by providing a plurality of connectors.

The blending device 302 is not particularly limited, provided that it is capable of mixing a plurality of the polymer products supplied from the polymerization reaction devices (301a, 301b). Examples of the blending device include a blending device equipped with a stirring device. As for the stirring device, preferred are a single screw stirring device, a twin-screw stirring device where screws are engaged with each other, a biaxial mixer containing a plurality of stirring elements which are engaged or overlapped with each other, a kneader containing spiral stirring elements which are engaged with each other, and a static mixer. The temperature (mixing temperature) for mixing the polymer products in the blending device 302 can be set in the similar manner to the setting the polymerization reaction temperature in the reaction unit of each polymerization reaction device (301a, 301b). Note that, the blending device 302 may separately contain a system for supplying a compressive fluid to the polymer products to be mixed. The pressure control valve 303 as one example of the complex outlet is a device for adjusting a flow rate of a complex product PP obtained by mixing the polymer product in the blending device 302.

In the second method, a ring-opening polymerizable monomer containing a carbonyl bond, and another ring-opening polymerizable monomer (e.g., ethylene carbonate, and lactide) are respectively polymerized in the presence of a compressive fluid in the polymerization reaction devices (301a, 301b) (polymerization step), and the polymer products obtained through polymerizations are blended in a compressive fluid to thereby obtain a copolymer (mixing step). The polymer product, such as polycarbonate, tends to be typically decomposed as it is heated again to the temperature equal to or higher than the melting point thereof even in a case where the polymer product contains the smallest amount of the monomer residues. The second method is effective, as the low viscous polycarbonate, which is melted with the compressive fluid, is blended at the temperature equal to lower than the melting point thereof at ambient pressure, and thus racemization or thermal deterioration can be prevented.

Note that, a copolymer can be mixed by combining the first method and the second method.

### <Third Embodiment>

Subsequently, the third embodiment is explained regarding the points different from the aforementioned first embodiment. In the third embodiment, a polymer product is produced through processes of a batch system. First, a polymerization reaction device 400 for use in the processes of the batch system is explained with reference to FIG. 7. FIG. 7 is a system diagram illustrating a polymerization step of the batch system. In the system diagram of FIG. 7, the polymerization reaction device 400 contains a tank 121, a metering pump 122, an addition pot 125, a reaction vessel 127, and valves (123, 124, 126, 128, 129). The aforementioned devices are connected with a pressure resistant pipeline 130 as illustrated in FIG. 7. Moreover, connectors (130a, 130b) are provided to the pipeline 130.

The tank 121 stores a compressive fluid. Note that, the tank 121 may stores therein gas or a solid that is transformed into a compressive fluid upon application of heat or pressure during the process for supplying to the reaction vessel 127, or within the reaction vessel 127. In this case, the gas or solid stored in the tank 121 is transformed into the state of (1), (2), or (3) of FIG. 2 in the reaction vessel 127 upon application of heat or pressure.

The metering pump 122 supplies the compressive fluid stored in the tank 121 to the reaction vessel 127 at constant pressure and a constant flow rate. The addition pot 125 stores a catalyst, which is added to raw materials in the reaction vessel 127. The valves (123, 124, 126, 129) are open or closed to switch between a pass for supplying the compressive fluid stored in the tank 121 to the reaction vessel 127 via the addition pot 125, and a pass for supplying the compressive fluid to the reaction vessel 127 without going through the addition pot 125.

Before starting polymerization, the ring-opening polymerizable monomer, the initiator, and the catalyst mixture are accommodated in the reaction vessel 127 in advance. The reaction vessel 127 is a pressure resistant vessel configured to bring the ring-opening polymerizable monomer, the initiator, and the catalyst mixture, which have been accommodated in advance, the compressive fluid supplied from the tank 121, and the catalyst supplied from the addition pot 125 into contact with each other to carry out ring-opening polymerization of the ring-opening polymerizable monomer. Note that, the catalyst may be accommodated in the reaction vessel 127 in advance. Moreover, the reaction vessel 127 may be provided with a gas outlet for removing evaporated products. The reaction vessel 127 contains a heater configured to heat the raw materials and the compressive fluid. Moreover, the reaction vessel 127 contains a stirring device configured to stir the raw materials and the compressive fluid. When there is a difference in density between the raw materials and the generated polymer product, the generated polymer product can be prevented from settling by stirring by means of the stirring device, and therefore the polymerization reaction can be performed more uniformly and quantitatively. The valve 128 is open after completing the polymerization reaction, to thereby discharge the polymer product P from the reaction vessel 127.

Examples

The present embodiment is more specifically explained through Examples and Comparative Examples hereinafter, but Examples shall not be construed to as limit the scope of the present invention in any way.

### (Example 1-1)

Ring-opening polymerization of ethylene carbonate was carried out by means of the polymerization reaction device 400 of a batch system illustrated in FIG. 7. The structure of the polymerization reaction device 400 is described below.
- Tank 121: Carbonic acid gas cylinder
- Addition pot 125: A 1/4-inch SUS316 pipe was sandwiched with valves (124, 129), and the resultant was used as an addition pot.
- Reaction vessel 127: A 100 mL pressure resistant vessel formed of SUS316 was used. To the reaction vessel, 108 g of a mixture (molar ratio: 99/1) of liquid ethylene carbonate (manufacturer: Tokyo Chemical Industry Co., Ltd., melting point: 37°C) as a ring-opening polymerizable monomer and lauryl alcohol as an initiator was added.

In Example 1-1, moreover, 1 mol% of a mixture (mass ratio: 50/50) of tin octylate and DMAP relative to the ring-opening polymerizable monomer was added to the reaction vessel 127.

The metering pump 122 was operated and the valves valve (123, 126) were open to supply carbon dioxide stored in the tank 121 to the reaction vessel 127 without going through the addition pot 125. The reaction vessel 127 was purged with carbon dioxide, and the temperature was set to 170°C, followed by adjusting the internal pressure of the reaction vessel 127 to 15 MPa. A polymerization reaction of the ethylene carbonate was carried out for 4 hours in the reaction vessel 127. After completing the reaction, the valve 128 was open to gradually return the internal temperature and pressure of the reaction vessel 127 to normal temperature and ambient pressure, and the polymer product (polyethylene carbonate) in the reaction vessel 127 was pushed out in the form of a strand from the extrusion cap provided at the edge of the valve 128. After immersing the polymer product in water of 10°C, the strand was cut with a cutter, and dried to thereby obtain a pellet. The production conditions of the polymer in Example 1-1 are presented in Table 1-1. Note that, a blending ratio, and polymerization density in the table were determined in the following manner.

### <Blending Ratio [Raw Materials /(Compressive Fluid + Raw Materials)]>

The blending ratio [raw materials/(compressive fluid + raw materials)] was calculated from the following equations. Special volume of supercritical carbon dioxide: 100 mL- 11 g/1.1 (specific gravity of the raw materials) = 90 mL
Mass of supercritical carbon dioxide: 90 mL × 0.213 (specific gravity of carbon dioxide at 170°C, 15 MPa) = 19.17 Blending ratio: 11 g/(11 g + 19.17 g) = 0.36

Note that, the mass of the raw materials was determined as 54 g with the conditions where the concentration of the raw materials was high, and as 11 g with the conditions where the concentration of the raw materials was low.

### <Polymerization Density>

As for the polymerization density, the value disclosed in the reference was used.

### • References

R. Span and W. Wagner "A New Equation of State for Carbon Dioxide covering the Fluid Region from the Triple Point Temperature to 1100 K at Pressures up to 800 MPa" J. Phys. Chem. Ref. Data 25, pp. 1509-1596 (1996)

Next, the pellet of Example 1-1 was subjected to the evaluations of the ring-opening polymerizable monomer content, weight average molecular weight, molecular weight distribution, oxide unit content, gas barrier properties, thermal resistant (thermal stability), and UV stability in the following manners. The results are presented in Table 1-1.

### <Ring-Opening Polymerizable Monomer Content>

The residual ring-opening polymerizable monomer content in the obtained polymer product was determined in accordance with a measuring method described in "Voluntary standard associated with food packaging formed of a synthetic resin, such as polyolefin, the revised 3rd edition, supplemented in June, 2004, Part 3, Hygienic test method, p 13." Specifically, the polymer product was homogeneously dissolved in dichloromethane. To the resulting solution, a mixed solution of acetone and cyclohexane was added to re-deposit the polymer product. The supernatant liquid as obtained was provided to a gas chromatograph (GC) equipped with a flame ionization detector (FID), to separate the ring-opening polymerizable monomer (the residual ring-opening polymerizable monomer containing carbonic acid ester). The separated monomer residues were subjected to quantitative determination by an internal reference method, to thereby determine the ring-opening polymerizable monomer content in the polymer product. Note that, the measurement of GC was carried out under the following conditions. The term "ppm" depicted in each table denotes a mass fraction.

### [Measuring Conditions of GC]

- Column: capillary column (DB-17MS, manufactured by J&W, 30 m (length) × 0.25 mm (inner diameter), membrane thickness: 0.25 µm)
- Internal reference: 2,6-dimethyl-γ-pyrone
- Column flow rate: 1.8 mL/min
- Column temperature: 50°C for 1 minute, heating to 320°C at a constant heating speed of 25 °C/min, retaining temperature at 320°C for 5 minutes.
- Detector: Flame ionization (FID)

### <Molecular Weight of Polymer Product>

The molecular weight of the polymer product was measured by gel permeation chromatography (GPC) under the following conditions.
- Device: GPC-8020 (manufactured by Tosoh Corporation)
- Column: TSK G2000HXL and G4000HXL (manufactured by Tosoh Corporation)
- Temperature: 40°C
- Solvent: Chloroform
- Flow rate: 1.0 mL/min

A sample (1 mL) having a concentration of 0.5% by mass was injected to measure a molecular weight distribution of the polymer product under the above conditions. A number average molecular weight (Mn) and weight average molecular weight (Mw) of the polymer product were calculated from the obtained molecular weight distribution using a molecular weight calibration curve obtained using a monodisperse polystyrene standard sample. Note that, the molecular weight distribution is a value obtained by dividing Mw by Mn.

### <Measurement of Oxide Unit Content>

A content of the oxide unit, which has been generated as a by-product of decarboxylation during polymerization of the ring-opening polymerizable monomer was calculated using the result of nuclear magnetic resonance (NMR). The measurement conditions of NMR were as follows.
- Device: JEOL Ltd.
- Solvent: deuterochloroform
- Measuring object: proton

The oxide unit content was calculated based on a ratio (molar ratio) of the oxide unit to the sum of the carbonate units (carbonate group) and oxide units (ether groups) contained in the polymer product as obtained by the spectrum analysis of NMR.

### <Measurement of Cyclic Oligomer Content>

The cyclic oligomer content was measured by gel permeation chromatography (GPC) under the following conditions.
- Device: GPC-8020 (manufactured by Tosoh Corporation)
- Column: TSK G2000HXL and G4000HXL (manufactured by Tosoh Corporation)
- Temperature: 40°C
- Solvent: Chloroform
- Flow rate: 0.5 mL/min

A sample (1 mL) having a concentration of 0.5% by mass was injected to measure a molecular weight distribution of the polymer product under the above conditions. The cyclic oligomer content was determined from the obtained molecular weight distribution of the polymer product using a monodisperse polystyrene standard sample.

### <Gas Barrier Properties>

An oxygen transmission rate of a sample (e.g., a film) was measured in accordance with ASTM-D1434, and determined as an evaluation value for gas barrier properties. Specifically, the lower the value is, more preferable gas barrier properties are. Specifically, the oxygen transmission rate was measured by means of an oxygen transmission rate measuring device (OX-TRAN2/21ML, manufactured by MOCON) under the constant temperature and constant humidity conditions, where the temperature was 23°C, and the humidity was 30%, 65%, or 90%.

The unit of the gas barrier properties data is Barrer. The obtained value (Barrer) is equal to a value obtained by multiplying the quotient by 10¹⁰, where the quotient is obtained by dividing the product, which is obtained by multiplying a number of cubic centimeters of the gas passed through the test film at the standard temperature and pressure for the measuring period (sec) by the thickness of the film (cm) (numerator), by the area (cm²) of the film exposed to the gas, time, and the partial pressure difference per centimeter of mercury passing through the film (denominator).

### -Evaluation Criteria-

A: 0.001 or greater, but less than 0.05
B: 0.05 or greater, but less than 0.1
C: 0.1 or greater

### <Evaluation Method of Thermal Resistance (Melting Point, Unit: °C)>

The polymer product was subjected to a measurement by means of a differential scanning calorimeter (DSC)(Q2000, manufactured by TA Instruments) in accordance with JIS K7121, and a melting point thereof was determined from the obtained DSC curve.

### <Evaluation Method of UV Stability>

A polymer sample was exposed to short wave UV light for a certain period (typically 10 minutes) with setting a distance (typically 1 inch or shorter) from the light source.

The color of the polymer sample before and after the exposure was recorded, and the variation (ΔYI) in the yellow index was calculated.

### -Evaluation Criteria-

A: Less than 5
B: 5 or greater, but less than 10
C: 10 or greater

### (Examples 1-2 to 1-9, and Comparative Example 1-1)

Polymer products of Examples 1-2 to 1-9 and Comparative Example 1-1 were produced in the same manner as in Example 1-1, provided that at least one of the following items were changed as depicted in Table 1-1 or Table 1-2, which were a type of the monomer, a type of the catalyst, a blending ratio of the catalyst, an amount of the initiator, the polymerization pressure, the polymerization reaction temperature, the polymerization density, the reaction time, the blending ratio [raw materials / (compressive fluid + raw materials)], and an order for adding the catalyst. Note that, the polymer was produced using only one type of the catalyst in Comparative Example 1-1. In the case where the catalyst was added after the mixing, the addition pot 125 was charged with the catalyst in advance, and the catalyst in the addition pot 125 was supplied to the mixture after the ring-opening polymerizable monomer and the initiator in the reaction vessel 127 were mixed. In Examples 1-5, 1-6, and 1-9, moreover, a polymerization reaction was carried out by adding 1 mol% of toluene was added as an entrainer relative to the ring-opening polymerizable monomer into the reaction vessel 127.

The pressure was controlled by varying a flow rate of the pump.

A pellet was obtained from each of the produced polymer product in the same manner as in Example 1-1. Moreover, the evaluations were performed in the same manner as in Example 1-1. The results are presented in Tables 1-1 and 1-2.

According to Examples above, the polymer product, which has excellent gas barrier properties, and prevents reduction in UV and thermal stability, could be obtained by reducing the oxide unit content.

**Table 1-1**

| Batch | Ex. 1-1 | Ex. 1-2 | Ex. 1-3 | Ex. 1-4 | Ex. 1-5 | Ex. 1-6 |
|---|---|---|---|---|---|---|
| Monomer | Ethylene carbonate | Ethylene carbonate | Ethylene carbonate | Ethylene carbonate | Propylene carbonate | Propylene carbonate |
| Catalyst 1 | Tin octylate | Tin octylate | Tin octylate | Tin octylate | Tin octylate | Tin octylate |
| Catalyst 2 | DMAP | DMAP | Potassium carbonate | Potassium carbonate | Sodium carbonate | DMAP |
| Catalyst blending ratio (catalyst 1/catalyst 2) | 50/50 | 50/50 | 50/50 | 20/80 | 70/30 | 40/60 |
| Addition of catalyst | Before | After | Before | After | Before | Before |
| Initiator | Lauryl alcohol | Lauryl alcohol | Lauryl alcohol | Lauryl alcohol | Lauryl alcohol | Lauryl alcohol |
| Initiator amount (mol%) | 0.5 | 0.2 | 0.5 | 0.2 | 0.5 | 0.5 |
| Organic solvent | None | None | None | None | Toluene 1 mol% | Toluene 1 mol% |
| Pressure (MPa) | 15 | 10 | 15 | 10 | 15 | 15 |
| Temperature (°C) | 170 | 170 | 170 | 170 | 150 | 150 |
| Polymerization density (kg/m³) | 213.04 | 134.84 | 213.04 | 134.84 | 233.93 | 233.93 |
| Reaction time (h) | 4 | 4 | 4 | 4 | 2 | 2 |
| Raw material/(compressive fluid/raw materials) | 0.36 | 0.89 | 0.36 | 0.89 | 0.36 | 0.36 |
| Oxide unit content (mol%) | 12 | 13 | 9 | 8 | 10 | 15 |
| Mw | 11,500 | 120,000 | 11,000 | 150,000 | 12,000 | 11,000 |
| Mw/Mn | 1.6 | 1.4 | 1.7 | 1.5 | 1.6 | 1.6 |
| Ring-opening polymerizable monomer content (ppm) | 400 | 150 | 450 | 130 | 400 | 300 |
| Cyclic oligomer content (ppm) | 7,000 | 900 | 2,000 | 800 | 7,500 | 8,000 |
| Gas barrier properties | B | A | B | A | B | B |
| Melting point (°C) | 223 | 225 | 223 | 225 | 224 | 222 |
| UV properties | B | A | A | A | A | B |

**Table 1-2**

| Batch | Ex. 1-7 | Ex. 1-8 | Ex. 1-9 | Comp. Ex. 1-1 |
|---|---|---|---|---|
| Monomer | Ethylene carbonate | Ethylene carbonate | Trimethylene carbonate | Ethylene carbonate |
| Catalyst 1 | Tin octylate | Tin octylate | Tin octylate | - |
| Catalyst 2 | DBU | DBU | DBU | DMAP |
| Catalyst blending ratio (catalyst 1/catalyst 2) | 50/50 | 50/50 | 20/80 | - |
| Addition of catalyst | Before | After | After | Before |
| Initiator | Lauryl alcohol | Lauryl alcohol | Lauryl alcohol | Lauryl alcohol |
| Initiator amount (mol%) | 0.5 | 0.2 | 0.5 | 0.5 |
| Organic solvent | None | None | Toluene 1 mol% | None |
| Pressure (MPa) | 15 | 10 | 15 | 15 |
| Temperature (°C) | 170 | 170 | 150 | 170 |
| Polymerization density (kg/m³) | 213.04 | 134.84 | 233.93 | 213.04 |
| Reaction time (h) | 4 | 4 | 2 | 4 |
| Raw material/(compressive fluid/raw materials) | 0.36 | 0.89 | 0.36 | 0.82 |
| Oxide unit content (mol%) | 11 | 13 | 14 | 60 |
| Mw | 12,500 | 135,000 | 12,000 | 45,000 |
| Mw/Mn | 1.5 | 1.5 | 1.6 | 1.5 |
| Ring-opening polymerizable monomer content (ppm) | 300 | 150 | 350 | 5,000 |
| Cyclic oligomer content (ppm) | 5,500 | 850 | 4,000 | 12,000 |
| Gas barrier properties | B | A | B | C |
| Melting point (°C) | 224 | 225 | 224 | 220 |
| UV properties | B | A | B | B |

### (Examples 2-1 to 2-6, and Comparative Example 1-2)

### <Production of Sheet>

Pellets of Examples 2-1 to 2-6, and Comparative Example 1-2 were each produced in the same manner as in Example 1-1, provided that a type of the monomer, a type of the catalyst, a blending ratio of the catalyst, an amount of the initiator, the polymerization pressure, the polymerization reaction temperature, the polymerization density, the reaction time, the blending ratio [raw materials / (compressive fluid + raw materials)], and an order for adding the catalyst were changed as depicted in Table 2. Note that, in Comparative Example 1-2, the polymer was produced using only one catalyst. In the case where the catalyst was added after the mixing, the addition pot 125 was charged with the catalyst in advance, and the catalyst in the addition pot 125 was supplied to the mixture after the ring-opening polymerizable monomer and the initiator in the reaction vessel 127 were mixed.

Each of the obtained pellets was melted and extruded by means of a single screw extruder (SE-90CV, manufactured by TOSHIBA MACHINE CO., LTD.) equipped with a T-die having a width of 1,000 mm and having a screw diameter of 90 mm at the extrusion temperature 215°C, and was adhered to a cast roll the temperature of which was set to 40°C, to thereby obtain a sheet having a thickness of 350 µm.

### <Production of Sheet Molded Article>

Using each of the sheets obtained in the production examples of the sheet as a material, a box-shaped container in the size of 250 mm in length, 200 mm in width, and 30 mm in depth was molded using a hot plate press (FKH type Compact heating pressure forming machine, manufactured by Asano Laboratories, Ltd.) and an aluminum mold. The temperature of the heated hot plate (heat softening temperature) during the molding was 120°C, the surface temperature of the mold was 117°C, and the heating time, cooling time, shot cycle required to give a shape were respectively 10 seconds, 5 seconds, and 15 seconds. The molded half-finished product was cut out with a cutter using Thomson die, to thereby obtain a sheet molded article.

### <Evaluation of Sheet and Sheet Molded Article>

The obtained sheets and sheet molded articles were evaluated based on the following evaluation criteria. Moreover, each of the obtained molded particles were evaluated in the same manner as in Example 1-1. The results are presented in Table 2. Note that, it is considered that a difference in the physical properties between the pellet and the molded article with the same polymer product is caused by the influence of heat and pressure applied during the shaping.

### -Evaluation of Sheet-

The sample in the size of 1,000 mm in length, and 1,000 mm in width was visually observed, and confirmed whether or not there was foreign matter that appeared like a fish eye.
A: There was no foreign matter looked like a fish eye.
B: There were 1 to 2 foreign matter looked like a fish eye.
C: There were 3 or more foreign matter looked like a fish eye.

### -Evaluation of Sheet Molded Article-

One hundred of the sheet molded article samples were produced, and moldability and appearance thereof were evaluated based on the following criteria.
A: There is no problem in the moldability and appearance.
B: There is a slight problem in the moldability and appearance (a cracking was caused in the 1 to 9 samples during ether molding or cutting out, and the samples looked slightly cloudy under the visual observation).
C: There is a clearly a problem in the moldability and appearance (a cracking was caused in the 10 or more samples during ether molding or cutting out, and the samples obviously looked cloudy under the visual observation).

**Table 2**

| Batch | Ex. 2-1 | Ex. 2-2 | Ex. 2-3 | Ex. 2-4 | Ex. 2-5 | Ex. 2-6 | Comp. Ex. 1-2 |
|---|---|---|---|---|---|---|---|
| Monomer | Ethylene carbonate | Ethylene carbonate | Ethylene carbonate | Ethylene carbonate | Ethylene carbonate | Ethylene carbonate | Ethylene carbonate |
| Catalyst 1 (Lewis acid catalyst) | Tin octylate | Tin octylate | Tin octylate | Tin octylate | Tin octylate | Tin octylate | - |
| Catalyst 2 (Lewis base catalyst) | DMAP | DMAP | Potassium carbonate | Potassium carbonate | DBU | DBU | DMAP |
| Catalyst blending ratio (catalyst 1/catalyst 2) | 50/50 | 50/50 | 50/50 | 20/80 | 50/50 | 50/50 | - |
| Addition of catalyst | Before | After | Before | After | Before | After | Before |
| Initiator | Lauryl alcohol | Lauryl alcohol | Lauryl alcohol | Lauryl alcohol | Lauryl alcohol | Lauryl alcohol | Lauryl alcohol |
| Initiator amount (mol%) | 0.5 | 0.2 | 0.5 | 0.2 | 0.5 | 0.2 | 0.5 |
| Organic solvent | None | None | None | None | None | None | None |
| Pressure (MPa) | 15 | 10 | 15 | 10 | 15 | 10 | 15 |
| Temperature (°C) | 170 | 170 | 170 | 170 | 170 | 170 | 170 |
| Polymerization density (kg/m³) | 213.04 | 134.84 | 213.04 | 134.84 | 213.04 | 134.84 | 213.04 |
| Reaction time (h) | 4 | 4 | 4 | 4 | 4 | 4 | 4 |
| Raw material/(comp ressive fluid/raw materials) | 0.36 | 0.89 | 0.36 | 0.89 | 0.36 | 0.89 | 0.82 |
| Oxide unit content (mol%) | 12 | 13 | 9 | 8 | 11 | 13 | 70 |
| Mw | 10,000 | 110,000 | 10,000 | 140,000 | 11,000 | 125,000 | 55,000 |
| Mw/Mn | 1.6 | 1.4 | 1.7 | 1.5 | 1.5 | 1.6 | 1.9 |
| Ring-opening polymerizable monomer content (ppm) | 400 | 150 | 450 | 130 | 300 | 150 | 5,000 |
| Cyclic oligomer content (ppm) | 7,000 | 900 | 2,000 | 800 | 5,500 | 850 | 18,000 |
| Gas barrier properties | B | A | B | A | B | A | C |
| Melting point (°C) | 223 | 225 | 223 | 225 | 224 | 225 | 220 |
| UV properties | B | A | B | A | A | A | C |
| Sheet evaluation | B | A | B | A | B | A | C |
| Sheet molded article evaluation | A | A | B | A | A | A | B |

### (Examples 3-1 to 3-6, and Comparative Example 1-3)

Polymer products of Examples 3-1 to 3-6, and Comparative Example 1-3 were each produced in the same manner as in Example 1-1, provided that a type of the monomer, a type of the catalyst, the blending ratio of the catalysts, an amount of the initiator, polymerization pressure, polymerization reaction temperature, polymerization density, reaction time, the blending ratio [raw materials/(compressive fluid + raw materials)], and the order for adding the catalyst were changed as depicted in Table 3. Note that, in Comparative Example 1-3, the polymer was produced using only one catalyst. In the case where the catalyst was added after the mixing, the addition pot 125 was charged with the catalyst in advance, and the catalyst in the addition pot 125 was supplied to the mixture after the ring-opening polymerizable monomer and the initiator in the reaction vessel 127 were mixed.

Each of the obtained polymer products was spun by means of a conventional simple melt spinning machine (Capillograph 1D PMD-C, manufactured by Tokyo Seiki Seisaku-Sho, Ltd.), and stretched by means of a hot air stretching machine, to thereby obtain monofilaments. The obtained fibers were evaluated in the same manner as in Example 1-1. The results are presented in Table 3.

**Table 3**

| Batch | Ex. 3-1 | Ex. 3-2 | Ex. 3-3 | Ex. 3-4 | Ex. 3-5 | Ex. 3-6 | Comp. Ex. 1-3 |
|---|---|---|---|---|---|---|---|
| Monomer | Ethylene carbonate | Ethylene carbonate | Ethylene carbonate | Ethylene carbonate | Ethylene carbonate | Ethylene carbonate | Ethylene carbonate |
| Catalyst 1 (Lewis acid catalyst) | Tin octylate | Tin octylate | Tin octylate | Tin octylate | Tin octylate | Tin octylate | - |
| Catalyst 2 (Lewis base catalyst) | DMAP | DMAP | Potassium carbonate | Potassium carbonate | DBU | DBU | DMAP |
| Catalyst blending ratio (catalyst 1/catalyst 2) | 50/50 | 50/50 | 50/50 | 20/80 | 50/50 | 50/50 | - |
| Addition of catalyst | Before | After | Before | After | Before | After | Before |
| Initiator | Lauryl alcohol | Lauryl alcohol | Lauryl alcohol | Lauryl alcohol | Lauryl alcohol | Lauryl alcohol | Lauryl alcohol |
| Initiator amount (mol%) | 0.5 | 0.2 | 0.5 | 0.2 | 0.5 | 0.2 | 0.5 |
| Organic solvent | None | None | None | None | None | None | None |
| Pressure (MPa) | 15 | 10 | 15 | 10 | 15 | 10 | 15 |
| Temperature (°C) | 170 | 170 | 170 | 170 | 170 | 170 | 170 |
| Polymerization density (kg/m³) | 213.04 | 134.84 | 213.04 | 134.84 | 213.04 | 134.84 | 213.04 |
| Reaction time (h) | 4 | 4 | 4 | 4 | 4 | 4 | 4 |
| Raw material/(comp ressive fluid/raw materials) | 0.36 | 0.89 | 0.36 | 0.89 | 0.36 | 0.89 | 0.82 |
| Oxide unit content (mol%) | 12 | 13 | 9 | 8 | 11 | 13 | 70 |
| Mw | 11,000 | 110,000 | 10,000 | 145,000 | 11,000 | 125,000 | 50,000 |
| Mw/Mn | 1.6 | 1.4 | 1.7 | 1.5 | 1.5 | 1.6 | 2.1 |
| Ring-opening polymerizable monomer content (ppm) | 300 | 150 | 400 | 130 | 400 | 150 | 3,000 |
| Cyclic oligomer content (ppm) | 7,000 | 900 | 2,000 | 800 | 5,500 | 850 | 22,000 |
| Gas barrier properties | B | A | B | A | B | A | C |
| Melting point (°C) | 223 | 225 | 223 | 225 | 224 | 225 | 220 |
| UV properties | B | A | A | A | B | A | B |

### (Examples 4-1 to 4-6, and Comparative Example 1-4)

Polymer products of Examples 4-1 to 4-6, and Comparative Example 1-4 were each produced in the same manner as in Example 1-1, provided that a type of the monomer, a type of the catalyst, the blending ratio of the catalyst, the amount of the initiator, the polymerization pressure, the polymerization reaction temperature, the polymerization density, the reaction time, the blending ratio [raw materials/(compressive fluid + raw materials)], and the order for adding the catalyst were changed as depicted in Table 4. Note that, in Comparative Example 1-4, the polymer was produced using only one catalyst. In the case where the catalyst was added after the mixing, the addition pot 125 was charged with the catalyst in advance, and the catalyst in the addition pot 125 was supplied to the mixture after the ring-opening polymerizable monomer and the initiator in the reaction vessel 127 were mixed.

Each of the polymer products was formed into a film having a thickness of 25 µm by means of a general inflation film-making machine, at the shaping temperature of 250°C. The obtained stretched films were subjected to the measurement of the physical properties as the polymer product in the methods as described above. The results are presented in Table 4.

**Table 4**

| Batch | Ex. 4-1 | Ex. 4-2 | Ex. 4-3 | Ex. 4-4 | Ex. 4-5 | Ex. 4-6 | Comp. Ex. 1-4 |
|---|---|---|---|---|---|---|---|
| Monomer | Ethylene carbonate | Ethylene carbonate | Ethylene carbonate | Ethylene carbonate | Ethylene carbonate | Ethylene carbonate | Ethylene carbonate |
| Catalyst 1 (Lewis acid catalyst) | Tin octylate | Tin octylate | Tin octylate | Tin octylate | Tin octylate | Tin octylate | - |
| Catalyst 2 (Lewis base catalyst) | DMAP | DMAP | Potassium carbonate | Potassium carbonate | DBU | DBU | DMAP |
| Catalyst blending ratio (catalyst 1/catalyst 2) | 50/50 | 50/50 | 50/50 | 20/80 | 50/50 | 50/50 | - |
| Addition of catalyst | Before | After | Before | After | Before | After | After |
| Initiator | Lauryl alcohol | Lauryl alcohol | Lauryl alcohol | Lauryl alcohol | Lauryl alcohol | Lauryl alcohol | Lauryl alcohol |
| Initiator amount (mol%) | 0.5 | 0.2 | 0.5 | 0.2 | 0.5 | 0.2 | 0.5 |
| Organic solvent | None | None | None | None | None | None | None |
| Pressure (MPa) | 15 | 10 | 15 | 10 | 15 | 10 | 15 |
| Temperature (°C) | 170 | 170 | 170 | 170 | 170 | 170 | 170 |
| Polymerization density (kg/m³) | 213.04 | 134.84 | 213.04 | 134.84 | 213.04 | 134.84 | 213.04 |
| Reaction time (h) | 4 | 4 | 4 | 4 | 4 | 4 | 4 |
| Raw material/(comp ressive fluid/raw materials) | 0.36 | 0.89 | 0.36 | 0.89 | 0.36 | 0.89 | 0.82 |
| Oxide unit content (mol%) | 12 | 13 | 9 | 8 | 11 | 13 | 70 |
| Mw | 10,000 | 115,000 | 10,000 | 140,000 | 11,500 | 120,000 | 25,000 |
| Mw/Mn | 1.6 | 1.4 | 1.7 | 1.5 | 1.5 | 1.6 | 1.9 |
| Ring-opening polymerizable monomer content (ppm) | 400 | 150 | 450 | 130 | 400 | 150 | 6,000 |
| Cyclic oligomer content (ppm) | 7,000 | 900 | 2,000 | 800 | 5,500 | 850 | 15,000 |
| Gas barrier properties | B | A | B | A | B | A | C |
| Melting point (°C) | 223 | 225 | 223 | 225 | 224 | 225 | 220 |
| UV properties | B | A | A | A | B | A | C |

### (Example 5-1)

In Example 5-1, the continuous-type polymerization reaction device 100 illustrated in FIG. 3 was used. The blending device of the contact unit 9 was a device, which contained a cylinder having an internal diameter (d) of 30 mm, and was equipped with a biaxial stirrer to which screws that engaged each other were provided, where two rotational axes were in the same rotational direction, and the rotational speed was 30 rpm. The reaction vessel of the reaction unit 13 was a biaxial kneader (TME-18, manufactured by Toshiba Corporation).

The gear pump (metering feeder 2) was operated to supply the predetermined quantity of the melted ethylene carbonate in the tank 1 to the blending device of the contact unit 9. The gear pump (metering feeder 4) was operated to supply the lauryl alcohol as the initiator in the tank 3 to the blending device of the contact unit 9 so that the amount of the lauryl alcohol was 0.5 mol% relative to the ethylene carbonate. Moreover, the gear pump (metering feeder 5) was operated to supply a mixture of the tin octylate and DMAP in the tank 5 to the inlet 9b so that the amount of the mixture was 0.5 mol% relative to the ethylene carbonate. The cylinder temperature of the blending device of the contact unit 9 was 80°C. Carbonic acid gas was supplied from the vent hole (inlet 9a) so that the pressure in the system was to be 15 MPa.

As for the cylinder temperature of the reaction vessel of the reaction unit 13, the temperature of the area adjacent to the area from which the raw materials were supplied was 170°C, the temperature at the edge are was 170°C, and the average retention time of the reaction product in the reaction vessel was 0.5 hours. After the reaction, the polymer product was discharged while reducing the pressure. As a result, carbon dioxide was vaporized to thereby obtain the polymer product. The obtained polymer product became foam as the carbon dioxide inside the polymer product was vaporized. The obtained polymer product was pulverized by means of a counter jet mill (manufactured by Hosokawa Micron Corporation), to thereby obtain particles having the volume average particle diameter of 6 µm.

### (Example 5-2 and Comparative Example 2-1)

Particles of Example 5-2 and Comparative Example 2-1 were each produced in the same manner as in Example 5-1, provided that a type of the monomer, a type of the catalyst, the blending ratio of the catalysts, an amount of the initiator, polymerization pressure, polymerization reaction temperature, polymerization density, reaction time, the blending ratio [raw materials/(compressive fluid + raw materials)], and the order for adding the catalyst were changed as depicted in Table 5. Note that, in Comparative Example 2-1, the polymer was produced using only one catalyst. In the case where the catalyst was added after the mixing, the gear pump (metering feeder 12) was operated to supply the mixture of tin octylate and DMAP in the tank 11 in an amount of 0.5 mol% relative to the ethylene carbonate into the inlet 13b. The obtained particles were subjected to the evaluations in the same manner as in Example 1-1. The results are presented in Table 5.

**Table 5**

| Continuous | Ex. 5-1 | Ex. 5-2 | Comp. Ex. 2-1 |
|---|---|---|---|
| Monomer | Ethylene carbonate | Ethylene carbonate | Ethylene carbonate |
| Catalyst 1 (Lewis acid catalyst) | Tin octylate | Tin octylate | - |
| Catalyst 2 (Lewis base catalyst) | Potassium carbonate | Calcium carbonate | DMAP |
| Catalyst blending ratio (catalyst 1/catalyst 2) | 50/50 | 50/50 | - |
| Addition of catalyst | Before | After | After |
| Initiator | Lauryl alcohol | Lauryl alcohol | Lauryl alcohol |
| Initiator amount (mol%) | 0.5 | 0.2 | 0.5 |
| Organic solvent | None | None | None |
| Pressure (MPa) | 15 | 10 | 15 |
| Temperature (°C) | 170 | 170 | 170 |
| Polymerization density (kg/m³) | 213.04 | 134.84 | 213.04 |
| Reaction time (h) | 0.5 | 0.5 | 0.5 |
| Raw material/(compressive fluid/raw materials) | 0.36 | 0.89 | 0.82 |
| Oxide unit content (mol%) | 7 | 8 | 55 |
| Mw | 11,000 | 130,000 | 55,000 |
| Mw/Mn | 1.7 | 1.6 | 2.3 |
| Ring-opening polymerizable monomer content (ppm) | 400 | 150 | 5,000 |
| Cyclic oligomer content (ppm) | 6,700 | 4,000 | 13,000 |
| Gas barrier properties | B | A | B |
| Melting point (°C) | 225 | 222 | 220 |
| UV properties | B | A | C |

### (Example 6-1)

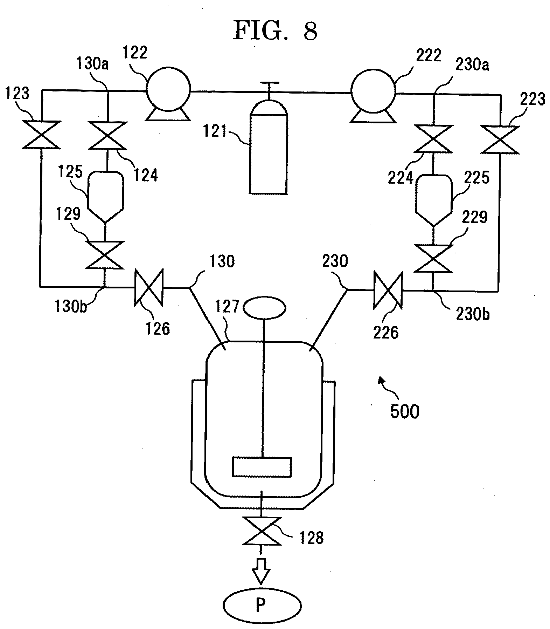

A polyethylene carbonate-polylactic acid copolymer was produced by means of the polymerization reaction device 500 illustrated in FIG. 8. FIG. 8 is a system diagram illustrating one example of the polymerization step of the batch system. The polymerization reaction device 500 had the identical structure to the polymerization reaction device 400 of FIG. 7, provided that the polymerization reaction device 500 contained a metering pump 222, an addition pot 225, valves (223, 224, 226, 229), and pipeline 230 provided with connectors (230a, 230b). Note that, the metering pump 222, the addition pot 225, the valves (223, 224, 226, 229), the pipeline 230 were each composed of the same device, system, or unit to the metering pump 122, the addition pot 125, the valve (123, 124, 126, 129), the pipeline 130, respectively.

The structure of the polymerization reaction device 400 was as follows.
- Tank 121: Carbonic acid gas cylinder
- Addition pot 125: A 1/4-inch SUS316 pipe was sandwiched with valves (124, 129), and the resultant was used as an addition pot.
- Addition pot 225: A 1/4-inch SUS316 pipe was sandwiched with valves (224, 229), and the resultant was used as an addition pot. This addition pot was charged with 54 g of a mixture (molar ratio: 99/1) of a ring-opening polymerizable monomer (lactide) having the high melting point among the raw materials, and an initiator (lauryl alcohol) in advance.
- Reaction vessel 127: A 100 mL pressure resistant vessel formed of SUS316 was used. The reaction vessel was charged with 54 g of a mixture (molar ratio: 99/1) of a ring-opening polymerizable monomer (ethylene carbonate) having the low melting point among the raw materials and an initiator (lauryl alcohol), in advance.

In Example 6-1, moreover, the addition pot 125 was charged with 0.5 mol% of a mixture (50/50) of tin octylate and DMAP relative to the ring-opening polymerizable monomer of the raw materials.

After heating the raw materials in the reaction vessel 127 to 60°C, the reaction vessel 127 was charged with supercritical carbon dioxide (60°C, 15 MPa) by the metering pump 122, and the resulting mixture was stirred for 10 minutes to melt the raw materials. After adjusting the temperature inside the system to 170°C, the path of the compressive fluid was changed to the path going through the addition pot 125. As a result, the catalyst, which had been loaded in the addition pot 125 in advance, was pushed out and added from the addition pot 125 into the reaction vessel 127 at the set pressure higher the pressure inside the reaction vessel 127. Thereafter, the ring-opening polymerizable monomer having the low melting point was polymerized for 2 hours.

Subsequently, the path of the compressive fluid was changed to the path going through the addition pot 225. As a result, the ring-opening polymerizable monomer having the high melting point, which had been loaded in the addition pot 225 in advance, was pushed out and added from the addition pot 225 into the reaction vessel 127 at the set pressure higher than the pressure inside the reaction vessel 127. Thereafter, the ring-opening polymerizable monomer having the high melting point was polymerized for 2 hours.

After completing the reaction, the polymer product was discharged by the valve 128 while reducing the pressure. As a result, carbon dioxide was vaporized to thereby obtain the polymer product. The obtained polymer product became foam as the carbon dioxide present inside the polymer product was vaporized. The obtained polymer product was pulverized by means of a counter jet mill (manufactured by Hosokawa Micron Corporation), to thereby obtain particles having the volume average particle diameter of 1µm to 50 µm. The obtained particles were subjected to the measurement of the physical properties as the polymer product in the methods as described above. The results are presented in Table 6-1.

### (Examples 6-2 to 6-9)

Polymer products of Examples 6-2 to 6-9 were each produced in the same manner as in Example 6-1, provided that a type of the monomer, a type of the catalyst, the blending ratio of the catalysts, an amount of the initiator, polymerization pressure, polymerization reaction temperature, polymerization density, reaction time, the blending ratio [raw materials/(compressive fluid + raw materials)], and the order for adding the catalyst were changed as depicted in Table 6-1 or Table 6-2. In the case where the catalyst was added before the mixing, the reaction vessel 127 was charged with the catalyst in advance. In Examples 6-5, 6-6, and 6-9, moreover, 1 mol% of toluene serving as an entrainer relative to the ring-opening polymerizable monomer was added to the reaction vessel 127, and then the polymerization reaction was carried out. The pressure was controlled by changing the flow rate with the pump.

Particles were obtained from each of the polymer products in the same manner as in Example 6-1. Moreover, the evaluations were performed in the same manner as in Example 6-1. The results are presented in Tables 6-1 and 6-2.

**Table 6-1**

| Batch | Ex. 6-1 | Ex. 6-2 | Ex. 6-3 | Ex. 6-4 | Ex. 6-5 | Ex. 6-6 |
|---|---|---|---|---|---|---|
| First monomer | Ethylene carbonate | Ethylene carbonate | Ethylene carbonate | Ethylene carbonate | Propylene carbonate | Ethylene carbonate |
| Second monomer | Lactide | Lactide | Lactide | Lactide | Caprolactone | Caprolactone |
| Catalyst 1 | Tin octylate | Tin octylate | Tin octylate | Tin octylate | Tin octylate | Tin octylate |
| Catalyst 2 | DMAP | DMAP | Potassium carbonate | Potassium carbonate | Sodium carbonate | DMAP |
| Catalyst blending ratio (catalyst 1/catalyst 2) | 50/50 | 40/60 | 50/50 | 50/50 | 70/30 | 50/50 |
| Addition of catalyst | After | After | Before | After | Before | Before |
| Initiator | Lauryl alcohol | Lauryl alcohol | Lauryl alcohol | Lauryl alcohol | Lauryl alcohol | Lauryl alcohol |
| Initiator amount (mol%) | 0.5 | 0.2 | 0.5 | 0.2 | 0.5 | 0.5 |
| Organic solvent | None | None | None | None | Toluene 1 mol% | Toluene 1 mol% |
| Pressure (MPa) | 15 | 10 | 15 | 10 | 15 | 15 |
| Temperature (°C) | 170 | 170 | 170 | 170 | 150 | 150 |
| Polymerization density (kg/m³) | 213.04 | 134.84 | 213.04 | 134.84 | 233.93 | 233.93 |
| Reaction time (h) | 4 | 4 | 4 | 4 | 2 | 2 |
| Raw material/(comp ressive fluid/raw materials) | 0.20 | 0.72 | 0.20 | 0.72 | 0.18 | 0.18 |
| Oxide unit content (mol%) | 13 | 9 | 10.5 | 7.4 | 13 | 15 |
| Mw | 16,000 | 120,000 | 32,000 | 140,000 | 25,000 | 18,000 |
| Mw/Mn | 1.5 | 1.4 | 1.6 | 1.5 | 1.6 | 1.6 |
| Ring-opening polymerizable monomer content (ppm) | 450 | 130 | 400 | 150 | 350 | 400 |
| Cyclic oligomer content (ppm) | 8,500 | 600 | 5,500 | 700 | 8,000 | 5,000 |
| Gas barrier properties | B | A | B | A | B | B |
| Melting point (°C) | 230 | 230 | 225 | 225 | 230 | 224 |
| UV properties | A | A | B | A | A | B |

**Table 6-2**

| Batch | Ex. 6-7 | Ex. 6-8 | Ex. 6-9 |
|---|---|---|---|
| First monomer | Propylene carbonate | Trimethylene carbonate | Trimethylene carbonate |
| Second monomer | Caprolactone | Caprolactone | Caprolactone |
| Catalyst 1 | Tin octylate | Tin octylate | Tin octylate |
| Catalyst 2 | DBU | DBU | DBU |
| Catalyst blending ratio (catalyst 1/catalyst 2) | 50/50 | 20/80 | 50/50 |
| Addition of catalyst | Before | After | Before |
| Initiator | Lauryl alcohol | Lauryl alcohol | Lauryl alcohol |
| Initiator amount (mol%) | 0.5 | 0.2 | 0.5 |
| Organic solvent | None | None | Toluene 1 mol% |
| Pressure (MPa) | 15 | 10 | 15 |
| Temperature (°C) | 170 | 170 | 150 |
| Polymerization density (kg/m³) | 213.04 | 134.84 | 233.93 |
| Reaction time (h) | 4 | 4 | 2 |
| Raw material/(compressive fluid/raw materials) | 0.18 | 0.72 | 0.60 |
| Oxide unit content (mol%) | 12 | 9 | 13.5 |
| Mw | 11,000 | 160,000 | 11,000 |
| Mw/Mn | 1.7 | 1.5 | 1.7 |
| Ring-opening polymerizable monomer content (ppm) | 400 | 150 | 350 |
| Cyclic oligomer content (ppm) | 5,800 | 700 | 9,000 |
| Gas barrier properties | B | A | B |
| Melting point (°C) | 223 | 230 | 224 |
| UV properties | A | A | A |

### Reference Signs List

- 1: tank
- 2: metering feeder
- 3: tank
- 4: metering feeder
- 5: tank
- 6: metering pump
- 7: tank
- 8: metering pump
- 9: blending device
- 10: feeding pump
- 11: tank
- 12: metering pump
- 13: reaction vessel
- 14: metering pump
- 15: extrusion cap
- 21: tank
- 22: pump
- 23: valve
- 24: valve
- 25: addition pot
- 26: valve
- 27: pressure vessel
- 28: valve
- 100: polymerization reaction device
- 200: polymerization reaction device

## Claims

1. A polymer product comprising:
aliphatic polycarbonate,
wherein an oxide unit content in the aliphatic polycarbonate is 20 mol% or less, and
wherein a monomer content in the aliphatic polycarbonate is 500 ppm or less, where the monomer is a monomer that is a base of the aliphatic polycarbonate,
wherein said oxide unit content is measured as outlined in the experimental part of the specification.

2. The polymer product according to claim 1, wherein the monomer that is a base of the aliphatic polycarbonate contains cyclic carbonate having a five-membered ring structure.

3. The polymer product according to claim 1 or claim 2, wherein a weight average molecular weight of the polymer product as measured by gel permeation chromatography using the method as outlined in the experimental part of the description is 1,000 or greater.

4. The polymer product according to claim 3, wherein a value obtained by dividing the weight average molecular weight by a number average molecular weight of the polymer product is 1.2 to 2.5.

5. The polymer product according to any one of claims 1 to 4, further comprising a Lewis acid catalyst, and a Lewis base catalyst.

6. A film, comprising:
the polymer product according to any one of claims 1 to 5.

7. A molded article, comprising:
the polymer product according to any one of claims 1 to 5.

8. A sheet, comprising:
the polymer product according to any one of claims 1 to 5.

9. A fiber, comprising:
the polymer product according to any one of claims 1 to 5.

## Patentansprüche

1. Polymerprodukt umfassend:
ein aliphatisches Polycarbonat,
wobei ein Oxideinheitgehalt in dem aliphatischen Polycarbonat 20 Mol-% oder weniger beträgt und
wobei ein Monomergehalt in dem aliphatischen Polycarbonat 500 ppm oder weniger beträgt, wobei das Monomer ein Monomer ist, das eine Base des aliphatischen Polycarbonats ist,
wobei der Oxideinheitgehalt wie im Versuchsteil der Beschreibung skizziert gemessen wird.

2. Polymerprodukt nach Anspruch 1, wobei das Monomer, das eine Base des aliphatischen Polycarbonats ist, cyclisches Carbonat enthält, das eine fünfgliedrige Ringstruktur aufweist.

3. Polymerprodukt nach Anspruch 1 oder Anspruch 2, wobei ein gewichtsdurchschnittliches Molekulargewicht des Polymerprodukts, wie durch Gelpermeationschromatographie unter Anwendung des Verfahrens wie im Versuchsteil der Beschreibung skizziert gemessen, 1000 oder mehr beträgt.

4. Polymerprodukt nach Anspruch 3, wobei ein Wert, der durch Teilen des gewichtsdurchschnittlichen Molekulargewichts durch ein zahlendurchschnittliches Molekulargewicht des Polymerprodukts erhalten wird, 1,2-2,5 beträgt.

5. Polymerprodukt nach einem der Ansprüche 1 bis 4, ferner einen Lewis-SäureKatalysator und einen Lewis-Base-Katalysator umfassend.

6. Folie, umfassend:
das Polymerprodukt nach einem der Ansprüche 1 bis 5.

7. Geformter Artikel, umfassend:
das Polymerprodukt nach einem der Ansprüche 1 bis 5.

8. Platte, umfassend:
das Polymerprodukt nach einem der Ansprüche 1 bis 5.

9. Faser, umfassend:
das Polymerprodukt nach einem der Ansprüche 1 bis 5.

## Revendications

1. Produit polymère comprenant:
un polycarbonate aliphatique,
une teneur en motifs oxydes dans le polycarbonate aliphatique étant de 20 % en mole ou moins, et
une teneur en monomères dans le polycarbonate aliphatique étant de 500 ppm ou moins, où le monomère est un monomère qui est une base du polycarbonate aliphatique,
ladite teneur en motifs oxydes étant mesurée tel que brièvement décrit dans la partie expérimentale de la description.

2. Produit polymère selon la revendication 1, dans lequel le monomère qui est une base du polycarbonate aliphatique contient du carbonate cyclique ayant une structure cyclique à cinq chaînons.

3. Produit polymère selon la revendication 1 ou la revendication 2, dans lequel un poids moléculaire moyen en poids du produit polymère tel que mesuré par chromatographie de perméation sur gel en utilisant le procédé tel que brièvement décrit dans la partie expérimentale de la description étant de 1 000 ou plus.

4. Produit polymère selon la revendication 3, dans lequel une valeur obtenue en divisant le poids moléculaire moyen en poids par un poids moléculaire moyen en nombre du produit polymère est de 1,2 à 2,5.

5. Produit polymère selon l'une quelconque des revendications 1 à 4, comprenant en outre un catalyseur acide de Lewis, et un catalyseur base de Lewis.

6. Film, comprenant:
le produit polymère selon l'une quelconque des revendications 1 à 5.

7. Article moulé, comprenant:
le produit polymère selon l'une quelconque des revendications 1 à 5.

8. Feuille, comprenant:
le produit polymère selon l'une quelconque des revendications 1 à 5.

9. Fibre, comprenant:
le produit polymère selon l'une quelconque des revendications 1 à 5.
